# EUROPÄISCHE PATENTSCHRIFT

(11) **EP 2 962 302 B1**
(45) Veröffentlichungstag und Bekanntmachung des Hinweises auf die Patenterteilung: **14.06.2017**
(21) Anmeldenummer: 14706629.4
(22) Anmeldetag: 26.02.2014
(51) Int. Cl.: G11B 7/245, G11B 7/254

(54) **SCHUTZLACKE UND KLEBSTOFFE AUF ACRYLATBASIS**
PROTECTIVE VARNISHES FOR PHOTOPOLYMER APPLICATIONS AN ACRYLATE BASIS
LAQUE DE PROTECTION POUR APPLICATIONS PHOTOPOLYMERIQUES À BASE D'ACRYLATE

(30) Priorität: 27.02.2013 EP 13156949
(43) Veröffentlichungstag der Anmeldung: 06.01.2016
(73) Patentinhaber: Covestro Deutschland AG, 51373 Leverkusen (DE)
(72) Erfinder: WEISER, Marc-Stephan, 51377 Leverkusen (DE); FLEMM, Ute, 42697 Solingen (DE); HENTSCHEL, Daniel, 51109 Köln (DE); BRUDER, Friedrich-Karl, 47802 Krefeld (DE); RÖLLE, Thomas, 51381 Leverkusen (DE); BERNETH, Horst, 51373 Leverkusen (DE); HÖNEL, Dennis, 53909 Zülpich-Wichterich (DE); FÄCKE, Thomas, 51375 Leverkusen (DE)
(74) Vertreter: Levpat
(86) Internationale Anmeldenummer: PCT/EP2014/053723
(87) Internationale Veröffentlichungsnummer: WO 2014/131795

(56) Entgegenhaltungen:
- EP-A1- 2 613 318
- EP-A2- 1 995 648
- JP-A- 2007 118 467

## Beschreibung

Die Erfindung betrifft einen Schichtaufbau mit einer Schutzschicht und einer belichteten Photopolymerschicht, wobei die Schutzschicht durch Umsetzung einer Mischung enthaltend oder bestehend aus wenigstens einem strahlungshärtenden Harz I), einem multifunktionellen strahlungshärtenden Harz II) und einem Photoinitiatorsystem III) erhältlich ist und in dem strahlungshärtenden Harz I) ≤ 5 Gew.-% Verbindungen mit einem gewichtsmittleren Molekulargewicht < 500 und ≥ 75 Gew.-% Verbindungen mit einem gewichtsmittleren Molekulargewicht > 1000 enthalten sind, das multifunktionelle strahlungshärtende Harz II) mindestens ein Acrylat mit wenigstens zwei strahlungshärtende Gruppen umfasst oder daraus besteht und in der Mischung mindestens 55 Gew.-% des strahlungshärtenden Harzes I) und maximal 35 Gew.-% des multifunktionellen strahlungshärtenden Harzes II) enthalten sind. Die Erfindung betrifft zudem ein Verfahren zur Herstellung eines solchen Schichtaufbaus sowie dessen Verwendung.

Photopolymerschichten zur Herstellung holographischer Medien sind grundsätzlich aus der WO 2011/054797 und der WO 2011/067057 bekannt. Vorteile dieser holografischen Medien ist deren hohe diffraktive Lichtbeugungseffizienz und, dass keine Nachprozessierungsschritte nach der holografischen Belichtung wie z.B. chemische oder thermische Entwicklungsschritte nötig sind. Diese Photopolymerschichten sind bevorzugt PU-basierte Zusammensetzungen.

In der DE 699 37 920 T2 ist beschrieben, dass holografische Photopolymerschichten ihre Farbe verändern können, wenn aus angrenzenden Schichten wie Klebstoffschichten Substanzen in die Photopolymerschicht einquellen oder aus dieser in die angrenzende Schicht ausbluten. Tritt eines der beiden Phänomene auf, kann es zu einer Volumenexpansion oder einem Volumenschrumpf in der Photopolymerschicht kommen. Dies führt wiederum zu einer langwelligen bzw. kurzwelligen Farbverschiebung des Hologramms. Insbesondere bei Mehrfarbhologrammen bewirkt dies unerwünschte visuelle Farbänderungen.

Um Volumenänderungen und die damit einhergehenden Farbveränderungen zu vermeiden, lehrt DE 699 37 920 T2 den angrenzenden Schichten und/oder der Photopolymerschicht vorab hinreichende Mengen der einquellenden oder ausblutenden Substanzen zuzusetzen. Dieses Verfahren ist jedoch aufwendig. Darüber hinaus muss je nachdem, welches Material für die angrenzende Schicht verwendet werden soll, eine Anpassung vorgenommen werden. Zuletzt muss die zugesetzte Substanz auch so gewählt werden, dass sie die Photopolymerschicht nicht zerstört. In der noch nicht veröffentlichten Patentanmeldung EP 12150275.1 ist beschrieben, dass durch geeignete Auswahl der Komponenten Schutzschichten auf eine belichtete Photopolymerschicht aufgebracht werden können. Diese Schutzschichten lassen sich durch Umsetzung wenigstens eines strahlungshärtenden Harzes I), eines Isocyanat-funktionellen Harzes II) und eines Photoinitiatorsystem III) herstellen. Die in EP 12150275.1 beschriebenen Schutzschichten erfüllen die Voraussetzungen für eine geeignete Schutzschicht, da sie nach Applikation ermöglichen einen Schichtaufbau mit einer Schutzschicht und einer belichteten Photopolymerschicht bereitzustellen, der mit unterschiedlichsten angrenzenden Schichten wie z.B. Klebstoffschichten fest verbunden werden kann, ohne das es zu Volumenänderungen der Photopolymerschicht und damit einhergehenden Farbveränderungen des Hologramms kommt. In der ebenfalls noch nicht veröffentlichten europäischen Patentanmeldung EP 12150277.7 ist offenbart, dass die in der EP 12150275.1 genannten Formulierungen auch für eine direkte Verklebung von belichteten Photopolymerschichten verwendet werden können.

Die in der EP 12150275.1 offenbarten Zusammensetzungen sind jedoch nicht in jeder Hinsicht zufriedenstellend. Durch das Vorhandensein eines Isocyanat-funktionellen Harzes sind sie vergleichsweise feuchtigkeitslabil und chemisch reaktiv auf isocyanat-reaktive Komponenten wie z.B. OH- und NH₂-Gruppen. Solche Gruppen sind jedoch in strahlungshärtenden Harzen oder anderen Hilfsstoffen häufig vorhanden, die für eine technische Formulierung essentiell sind. Dies führt dazu, dass die Zusammensetzung vor Verwendung stets neu zubereitet werden muss, was die technische Anwendung einschränkt, da damit am Applikationsort sowohl geeignete Mischapparaturen als auch geeignete Sicherheitsvorkehrungen zur Handhabung Isocyanatfunktioneller Komponenten vorhanden sein müssen. JP 2007 118467A offenbart einen Schichtaufbau für ein holografisches Aufzeichnungsmedium enthaltend eine holografische Aufzeichnungschicht und eine Schutzschicht. Die Schutzschicht wird hergestellt aus einer Mischung von (i) Ionizing-radiation hardening-resin-composition M (ii) UV-6630B von Nippon Goshei (iii) PE Wachs (iv) Photoinitiator Irgacure 907 und (v) Lösemittel. Die Aufgabe der vorliegenden Erfindung bestand somit darin, einen Schichtaufbau mit einer verbesserten Schutzschicht bereitzustellen, die einfach herstellbar ist und die Anforderungen sowohl betreffend die Verträglichkeit und Unveränderlichkeit der Photopolymerschicht als auch an eine ausreichende Schutzfunktion gegenüber angrenzenden Schichten wie z.B. Klebstoffschichten erfüllt, die später auf diese Schutzschicht appliziert werden.

Die Aufgabe wird gelöst durch einen Schichtaufbau mit einer Schutzschicht und einer belichteten Photopolymerschicht, wobei die Schutzschicht durch Umsetzung einer Mischung enthaltend oder bestehend aus wenigstens einem strahlungshärtenden Harz I), einem multifunktionellen strahlungshärtenden Harz II) und einem Photoinitiatorsystem III) erhältlich ist und in dem strahlungshärtenden Harz I) ≤ 5 Gew.-% Verbindungen mit einem gewichtsmittleren Molekulargewicht < 500 und ≥ 75 Gew.-% Verbindungen mit einem gewichtsmittleren Molekulargewicht > 1000 enthalten sind, das multifunktionelle strahlungshärtende Harz II) mindestens ein Acrylat mit wenigstens zwei strahlungshärtende Gruppen umfasst oder daraus besteht und in der Mischung mindestens 55 Gew.-% des strahlungshärtenden Harzes I) und maximal 35 Gew.-% des multifunktionellen strahlungshärtenden Harzes II) enthalten sind.

Der Erfindung liegt die durch Versuche gestützte Erkenntnis zugrunde, dass mit der vorgenannten Schutzschicht unter anderem der negative Einfluss von bislang verwendeten Klebstoffen auf in einer Photopolymerschicht erzeugten Hologrammen unterbunden werden kann. Dies gilt speziell für (Haft-)Klebstoffe auf Acrylatbasis. Es wird vermutet, dass die Schutzschicht als Diffusionsbarriere für niedermolekulare Substanzen aus dem Klebstoff in die holographische Photopolymerschicht fungiert.

Unter dem Begriff "funktionell" werden strahlenhärtende reaktiven Gruppen verstanden, insbesondere in Form von Doppelbindungen. "Multifunktionell" bedeutet in diesem Zusammenhang, dass das entsprechende Harz zumindest zwei dieser strahlenhärtenden reaktiven Gruppen pro Molekül trägt.

Erfindungsgemäß umfasst die Mischung zur Erzeugung der Schutzschicht wenigstens ein strahlungshärtendes Harz I), ein multifunktionelles strahlungshärtendes Harz II) und ein Photoinitiatorsystem III). Hierunter wird verstanden, dass jeweils wenigstens eine - oder aber auch mehrere Vertreter - der jeweiligen Substanzklassen eingesetzt werden. Die Substanzen strahlungshärtendes Harz I), multifunktionelles strahlungshärtendes Harz II) und Photoinitiatorsystem III) ergeben zusammen maximal 100 Gew.-% oder auch weniger, wenn noch weitere Komponenten in der Mischung zugegen sind.

### Beschreibung der Photopolymerschicht

Geeignete Photopolymer-Formulierungen für die Herstellung der Photopolymerschicht sind dem Fachmann ebenfalls bekannt und beispielsweise in WO-A 2011/054797 und WO 2011/067057 beschrieben. Bevorzugt handelt es sich bei der Photopolymer-Formulierung für die Herstellung der Photopolymerschicht um eine solche umfassend eine Polyisocyanat-Komponente, eine isocyanatreaktive Komponente, wenigstens ein Schreibmonomer und wenigstens einen Photoinitiator.

Die Polyisocyanat-Komponente a) umfasst wenigstens eine organische Verbindung, die wenigstens zwei NCO-Gruppen aufweist. Als Polyisocyanat können alle dem Fachmann an sich bekannten Verbindungen oder deren Mischungen eingesetzt werden. Diese Verbindungen können auf aromatischer, araliphatischer, aliphatischer oder cycloaliphatischer Basis sein. In untergeordneten Mengen kann die Polyisocyanat-Komponente a) auch Monoisocyanate, d.h. organische Verbindungen mit einer NCO-Gruppe, und / oder ungesättigte Gruppen enthaltende Polyisocyanate umfassen.

Beispiele für geeignete Polyisocyanate sind Butylendiisocyanat, Hexamethylendiisocyanat (HDI), 2,2,4-Trimethylhexamethylendiisocyanat und dessen Isomere (TMDI), Isophorondiisocyanat (IPDI), 1,8-Diisocyanato-4-(isocyanatomethyl)-octan, die isomeren Bis-(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und / oder 2,6-Toluylendiisocyanat, 1,5-Naphthylendiisocyanat, 2,4'- und / oder 4,4'-Diphenylmethandiisocyanat, Triphenylmethan-4,4',4"-triisocyanat oder beliebige Mischungen der vorgenannten Verbindungen.

Monomere Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen können ebenfalls verwendet werden.

Bevorzugt sind Polyisocyanate auf Basis aliphatischer und / oder cycloaliphatischer Di- oder Triisocyanate. Besonders bevorzugt handelt es sich bei den Polyisocyanaten um di- oder oligomerisierte aliphatische und / oder cycloaliphatische Di- oder Triisocyanate. Ganz besonders bevorzugte Polyisocyanate sind Isocyanurate, Uretdione und / oder Iminooxadiazindione basierend auf HDI, TMDI, 1,8-Diisocyanato-4-(isocyanatomethyl)-octan oder deren Mischungen.

Die Polyisocyanat-Komponente a) kann auch NCO-funktionelle Prepolymere umfassen oder daraus bestehen. Die Prepolymere können Urethan-, Allophanat-, Biuret- und / oder Amidgruppen aufweisen. Derartige Prepolymere sind beispielsweise durch Umsetzung von Polyisocyanaten a1) mit isocyanatreaktiven Verbindungen a2) erhältlich.

Als Polyisocyanate a1) eignen sich alle bekannten aliphatischen, cycloaliphatischen, aromatischen oder araliphatischen Di- und Triisocyanate. Daneben können auch die bekannten höhermolekularen Folgeprodukte monomerer Di- und / oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden.

Beispiele für geeignete monomere Di- oder Triisocyanate, die als Polyisocyanat a1) eingesetzt werden können, sind Butylendiisocyanat, Hexamethylendiisocyanat, Isophorondiisocyanat, Trimethyl-hexamethylen-diisocyanat (TMDI), 1,8-Diisocyanato-4-(isocyanatomethyl)-octan, Isocyanatomethyl-1,8-octandiisocyanat (TIN), 2,4- und / oder 2,6-Toluen-diisocyanat.

Als isocyanatreaktive Verbindungen a2) können bevorzugt OH-funktionelle Verbindungen verwendet werden. Dabei kann es sich insbesondere um Polyole handeln. Ganz besonders bevorzugt können als isocyanatreaktive Verbindung a2) die weiter unten beschriebenen Polyole der Komponente b) verwendet werden.

Es ist ebenfalls möglich, als isocyanatreaktive Verbindungen a2) Amine einzusetzen. Beispiele geeigneter Amine sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine^{®}, aminterminierte Polymere, insbesondere mit zahlenmittleren Molmassen bis 10000 g/Mol. Mischungen der vorgenannten Amine können ebenfalls verwendet werden.

Bevorzugt ist auch, wenn die isocyanatreaktiven Verbindungen a2) eine zahlenmittlere Molmasse von ≥ 200 und ≤ 10000 g/Mol, weiter bevorzugt ≥ 500 und ≤ 8500 g/Mol und ganz besonders bevorzugt ≥ 1000 und ≤ 8200 g/Mol aufweisen.

Die Prepolymere der Polyisocyanat-Komponente a) können insbesondere einen Restgehalt an freiem monomerem Isocyanat < 1 Gew.-%, besonders bevorzugt < 0,5 Gew.-% und ganz besonders bevorzugt < 0,2 Gew.-% aufweisen.

Die Polyisocyanat-Komponente a) kann auch Mischungen der vorgenannten Polyisocyanate und Prepolymere umfassen.

Es ist gegebenenfalls auch möglich, dass die Polyisocyanat-Komponente a) anteilsmäßig Polyisocyanate enthält, die teilweise mit isocyanat-reaktiven, ethylenisch ungesättigten Verbindungen umgesetzt sind. Bevorzugt werden hierbei als isocyanat-reaktive, ethylenisch ungesättigte Verbindungen α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt. Besonders bevorzugt sind Acrylate und Methacrylate mit mindestens einer isocyanatreaktiven Gruppe.

Der Anteil der Polyisocyanate in der Polyisocyanat-Komponente a), der teilweise mit isocyanat-reaktiven, ethylenisch ungesättigten Verbindungen umgesetzt ist, kann 0 bis 99 Gew.-%, bevorzugt 0 bis 50 Gew.-%, besonders bevorzugt 0 bis 25 Gew.-% und ganz besonders bevorzugt 0 bis 15 Ges.-% betragen.

Es ist gegebenenfalls auch möglich, dass die Polyisocyanat-Komponente a) vollständig oder anteilsmäßig Polyisocyanate enthält, die ganz oder teilweise mit aus der Beschichtungstechnologie bekannten Blockierungsmitteln umgesetzt sind. Beispiel für Blockierungsmittel sind Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder deren Mischungen.

Besonders bevorzugt ist, wenn die Polyisocyanat-Komponente a) ein aliphatisches Polyisocyanat oder ein aliphatisches Prepolymer und bevorzugt ein aliphatisches Polyisocyanat oder aliphatisches Prepolymer mit primären NCO-Gruppen umfasst oder daraus besteht.

Die isocyanatreaktive Komponente b) umfasst wenigstens eine organische Verbindung, die wenigstens zwei isocyanatreaktive Gruppen aufweist (isocyanatreaktive Verbindung). Im Rahmen der vorliegenden Erfindung werden als isocyanatreaktive Gruppen Hydroxy-, Amino- oder Thiogruppen angesehen.

Als isocyanatreaktive Komponente können alle Systeme eingesetzt werden, die im Mittel wenigstens 1,5 und bevorzugt mindestens 2, besonders bevorzugt 2 bis 3 isocyanatreaktive Gruppen aufweisen.

Geeignete isocyanatreaktive Verbindungen sind beispielsweise Polyester-, Polyether-, Polycarbonat-, Poly(meth)acrylat- und / oder Polyurethanpolyole.

Besonders geeignete Polyesterpolyole sind beispielsweise lineare oder verzweigte Polyesterpolyole, die aus aliphatischen, cycloaliphatischen oder aromatischen Di- bzw. Polycarbonsäuren bzw. ihren Anhydriden durch Umsetzung mit mehrwertigen Alkoholen einer OH-Funktionalität ≥ 2 erhältlich sind.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren. Diese können bevorzugt durch Anlagerung von Lactonen bzw. Lactongemischen wie Butyrolacton, ε-Caprolacton und / oder Methyl-ε-caprolacton an hydroxyfunktionelle Verbindungen wie mehrwertige Alkohole einer OH-Funktionalität ≥ 2, beispielsweise der vorstehend genannten Art, erhalten werden.

Die Polyesterpolyole haben bevorzugt zahlenmittlere Molmassen von ≥ 400 und ≤ 4000 g/Mol, besonders bevorzugt von ≥ 500 und ≤ 2000 g/Mol.

Die OH-Funktionalität der Polyesterpolyole beträgt bevorzugt 1,5 bis 3,5, besonders bevorzugt 1,8 bis 3,0.

Beispiele zur Herstellung der Polyester besonders geeigneter Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder Mischungen daraus.

Besonders zur Herstellung der Polyester geeignete Alkohole sind beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Glycerin oder Mischungen daraus.

Geeignete Polycarbonatpolyole sind in an sich bekannter Weise durch Umsetzung von organischen Carbonaten oder Phosgen mit Diolen oder Diol-Mischungen zugänglich.

Hierfür geeignete organische Carbonate sind beispielsweise Dimethyl-, Diethyl- und Diphenylcarbonat.

Geeignete mehrwertige Alkohole umfassen die oben im Rahmen der Diskussion der Polyesterpolyole genannten mehrwertigen Alkoholen einer OH-Funktionalität ≥ 2. Bevorzugt können 1,4-Butandiol, 1,6-Hexandiol und / oder 3-Methylpentandiol eingesetzt werden.

Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Die Polycarbonatpolyole haben bevorzugt zahlenmittlere Molmassen von ≥ 400 und ≤ 4000 g/Mol, besonders bevorzugt von ≥ 500 und ≤ 2000 g/Mol.

Die OH-Funktionalität der Polycarbonatpolyole beträgt bevorzugt 1,8 bis 3,2, besonders bevorzugt 1,9 bis 3,0.

Geeignete Polyetherpolyole sind gegebenenfalls blockweise aufgebaute Polyadditionsprodukte cyclischer Ether an OH- oder NH-funktionelle Startermoleküle. Geeignete cyclische Ether sind beispielsweise Styroloxide, Ethylenoxid, Propylenoxid, Tetrahydrofuran, Butylenoxid, Epichlorhydrin, sowie deren beliebige Mischungen. Als Startermoleküle können die oben im Rahmen der Diskussion der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art, die ausschließlich auf Propylenoxid basieren. Bevorzugt sind ebenfalls Polyetherpolyole der vorgenannten Art, die statistische Copolymere oder Block-Copolymere, basierend auf Propylenoxid mit weiteren 1-Alkylenoxiden, sind, wobei der 1-Alkylenoxidanteil insbesondere nicht höher als 80 Gew.-% ist. Ganz besonders bevorzugt sind Propylenoxid-Homopolymere sowie statistische Copolymere oder Block-Copolymere, die Oxyethylen-, Oxypropylen- und / oder Oxybutyleneinheiten aufweisen, wobei der Anteil der Oxypropyleneinheiten bezogen auf die Gesamtmenge aller Oxyethylen-, Oxypropylen- und Oxybutyleneinheiten insbesondere ≥ 20 Gew.-%, bevorzugt ≥ 45 Gew.-% ist. Oxypropylen und Oxybutylen umfasst hierbei alle linearen und verzweigten C₃- und C₄-Isomere.

Die Polyetherpolyole haben bevorzugt zahlenmittlere Molmassen von ≥ 250 und ≤ 10000 g/Mol, besonders bevorzugt von ≥ 500 und ≤ 8500 g/Mol und ganz besonders bevorzugt von ≥ 600 und ≤ 4500 g/Mol. Ihre OH-Funktionalität beträgt bevorzugt 1,5 bis 4,0 und besonders bevorzugt 1,8 bis 3,1.

Weitere bevorzugte Polyetherpolyole bestehen aus einer isocyanatreaktiven Komponente umfassend hydroxyfunktionelle Multiblockcopolymere des Typs Y(Xᵢ-H)ₙ mit i = 1 bis 10 und n = 2 bis 8, wobei die Segmente Xᵢ jeweils aus Oxyalkyleneinheiten der Formel (I)

-CH₂-CH(R)-O-(I)

aufgebaut sind, in der R ein Alkyl- oder ein Arylrest, ist, der auch substituiert oder durch Heteroatome (wie Ethersauerstoffe) unterbrochen sein kann oder Wasserstoff und Y der zugrundeliegende Starter ist.

Der Rest R kann bevorzugt ein Wasserstoff-, Methyl-, Butyl-, Hexyl-, Octyl- oder ein ethergruppenhaltiger Alkylrest sein. Bevorzugte ethergruppenhaltiger Alkylreste basieren auf Oxyalkyleneinheiten.

Bevorzugt ist n eine ganze Zahl von 2 bis 6, besonders bevorzugt 2 oder 3 und ganz besonders bevorzugt gleich 2.

Bevorzugt ist ebenfalls, wenn i eine ganze Zahl von 1 bis 6, besonders bevorzugt von 1 bis 3 und ganz besonders bevorzugt gleich 1 ist.

Weiter bevorzugt ist, wenn der Anteil der Segmente Xᵢ, bezogen auf die Gesamtmenge der Segmente Xi und Y, > 50 Gew.-% und bevorzugt ≥ 66 Gew.-% ist.

Bevorzugt ist auch, wenn der Anteil der Segmente Y, bezogen auf die Gesamtmenge der Segmente Xᵢ und Y, < 50 Gew.-% und bevorzugt < 34 Gew.-% ist.

Die Multiblockcopolymere Y(Xᵢ-H)ₙ haben bevorzugt zahlenmittlere Molekulargewichte von > 1200 g/Mol, besonders bevorzugt > 1950 g/Mol, jedoch bevorzugt < 12000 g/Mol, besonders bevorzugt < 8000 g/Mol.

Die Blöcke Xᵢ können Homopolymere sein, die ausschließlich aus gleichen Oxyalkylen-Wiederholungseinheiten bestehen. Sie können auch statistisch aus verschiedenen Oxyalkyleneinheiten oder ihrerseits blockweise aus verschiedenen Oxyalkyleneinheiten aufgebaut sein.

Bevorzugt basieren die Segmente Xᵢ ausschließlich auf Propylenoxid oder statistischen oder blockweisen Mischungen von Propylenoxid mit weiteren 1-Alkylenoxiden, wobei der Anteil an weiteren alkylenoxiden bevorzugt nicht > 80 Gew.-% ist.

Besonders bevorzugte Segmente Xᵢ sind Propylenoxid-Homopolymere sowie statistische Copolymere oder Block-Copolymere, die Oxyethylen- und / oder Oxypropyleneinheiten aufweisen. Ganz besonders bevorzugt beträgt in diesem Fall der Anteil der Oxypropyleneinheiten, bezogen auf die Gesamtmenge aller Oxyethylen- und Oxypropyleneinheiten, ≥ 20 Gew.-% und noch weiter bevorzugt ≥ 40 Gew.-%.

Die Blöcke Xᵢ können durch ringöffnende Polymerisation der vorstehend beschriebenen Alkylenoxide auf einen n-fach hydroxy- oder aminofunktionellen Starter Y(H)ₙ aufaddiert werden.

Der Starter Y(H)ₙ kann aus di- und / oder höher hydroxyfunktionellen Polymerstrukturen auf Basis cyclischer Ether oder aus di- und / oder höher hydroxyfunktionellen Polycarbonat-, Polyester-, Poly(meth)acrylat-, Epoxydharz- und / oder Polyurethanstruktureinheiten oder entsprechenden Hybriden bestehen.

Beispiele für geeignete Starter Y(H)ₙ sind die oben genannten Polyester-, Polycarbonat- und Polyetherpolyole.

Die Polyesterpolyole haben bevorzugt zahlenmittlere Molmassen von 200 bis 2000 g/Mol, besonders bevorzugt von 400 bis 1400 g/Mol.

Die Polycarbonatpolyole haben bevorzugt zahlenmittlere Molmassen von 400 bis 2000 g/Mol, besonders bevorzugt von 500 bis 1400 g/Mol und ganz besonders bevorzugt von 650 bis 1000 g/Mol.

Die Polyetherpolyole haben bevorzugt zahlenmittlere Molmassen von 200 bis 2000 g/Mol, besonders bevorzugt von 400 bis 1400 g/Mol und ganz besonders bevorzugt von 650 bis 1000 g/Mol.

Besonders bevorzugte Starter Y(H)ₙ sind insbesondere difunktionelle Polymere des Tetrahydrofuran, insbesondere difunktionelle aliphatische Polycarbonatpolyole und Polyesterpolyole sowie Polymere des ε-Caprolacton insbesondere mit zahlenmittleren Molmassen < 3100 g/Mol, bevorzugt ≥ 500 g/mol und ≤ 2100 g/mol.

Weitere Beispiele geeigneter Polyether und Verfahren zu deren Herstellung sind in der EP 2 172 503 A1 beschrieben, auf deren diesbezügliche Offenbarung hiermit Bezug genommen wird.

Bei einer weiteren bevorzugten Ausführungsform ist vorgesehen, dass das Schreibmonomer wenigstens ein mono- und / oder ein multifunktionales Schreibmonomer umfasst, wobei es sich insbesondere um mono- und multifunktionelle Acrylat-Schreibmonomere handeln kann. Besonders bevorzugt kann das Schreibmonomer wenigstens ein monofunktionelles und ein multifunktionelles Urethan(meth)acrylat umfassen.

Bei den Acrylat-Schreibmonomeren kann es sich insbesondere um Verbindungen der allgemeinen Formel (II) 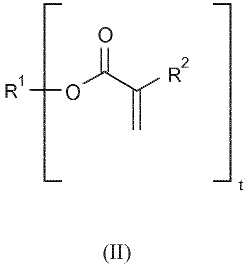 handeln, bei denen t≥1 und t≤4 ist und R¹ ein linearer, verzweigter, cyclischer oder heterocyclischer unsubstituierter oder gegebenenfalls auch mit Heteroatomen substituierter organischer Rest und/oder R² Wasserstoff, ein linearer, verzweigter, cyclischer oder heterocyclischer unsubstituierter oder gegebenenfalls auch mit Heteroatomen substituierter organischer Rest ist. Besonders bevorzugt ist R² Wasserstoff oder Methyl und/oder R¹ ein linearer, verzweigter, cyclischer oder heterocyclischer unsubstituierter oder gegebenenfalls auch mit Heteroatomen substituierter organischer Rest.

Ebenso ist es möglich, dass weitere ungesättigte Verbindungen wie α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol, Olefine, wie z.B. 1-Octen und/oder 1-Decen, Vinylestern, (Meth)acrylnitril, (Meth)acrylamid, Methacrylsäure, Acrylsäure zugesetzt werden. Bevorzugt sind aber Acrylate und Methacrylate.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobornylmethacrylat, Phenylacrylat, Phenylmethacrylat, p-Chlorphenylacrylat, p-Chlorphenylmethacrylat, p-Bromphenylacrylat, p-Bromphenyl-methacrylat, 2,4,6-Trichlorphenylacrylat, 2,4,6-Trichlorphenylmethacrylat, 2,4,6-Tribromphenyl-acrylat, 2,4,6-Tribromphenylmethacrylat, Pentachlorphenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Propan-2,2-diylbis[(2,6-dibrom-4,1-phenylen)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, N-Carbazolylacrylate, um nur eine Auswahl verwendbarer Acrylate und Methacrylate zu nennen.

Selbstverständlich können als Acrylate auch Urethanacrylate verwendet werden. Unter Urethanacrylaten versteht man Verbindungen mit mindestens einer Acrylsäureestergruppe, die zusätzlich über mindestens eine Urethanbindung verfügen. Es ist bekannt, dass solche Verbindungen durch Umsetzung eines Hydroxy-funktionellen Acrylsäureesters mit einer Isocyanat-funktionellen Verbindung erhalten werden können.

Beispiele hierfür verwendbarer Isocyanat-funktionelle Verbindungen sind aromatische, araliphatische, aliphatische und cycloaliphatische Di-, Tri- oder Polyisocyanate. Es können auch Mischungen solcher Di-, Tri- oder Polyisocyanate eingesetzt werden. Beispiele geeigneter Di-, Tri- oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat, die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, 1,5-Naphthylendiisocyanat, m-Methylthiophenylisocyanat, Triphenylmethan-4,4',4"-triisocyanat und Tris(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische oder araliphatische Di-, Tri- oder Polyisocyanate.

Als hydroxyfunktionelle Acrylate oder Methacrylate für die Herstellung von Urethanacrylaten kommen beispielsweise Verbindungen in Betracht wie 2-Hydroxyethyl(meth)acrylat, Polyethylenoxid-mono(meth)acrylate, Polypropylenoxidmono(meth)acrylate, Polyalkylenoxidmono(meth)-acrylate, Poly(ε-caprolacton)mono(meth)acrylate, wie z.B. Tone^{®} M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono(meth)acrylate.

Darüber hinaus sind als isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Ebenfalls verwendet werden können die an sich bekannten hydroxylgruppenhaltigen Epoxy(meth)acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und m-Methylthiophenylisocyanat mit alkoholfunktionellen Acrylaten wie Hydroxyethyl(meth)acrylat, Hydroxypropyl(meth)acrylat und Hydroxybutyl(meth)-acrylat.

Besonders bevorzugt ist eine Kombination aus Komponenten a) und b) bei der Herstellung der Matrixpolymere bestehend aus Additionsprodukten von Butyrolacton, e-Caprolacton und/oder Methyl-ε-caprolacton an Polyetherpolyolen einer Funktionalität von 1,8 bis 3,1 mit zahlenmittleren Molmassen von 200 bis 4000 g/mol in Verbindung mit Isocyanuraten, Uretdionen, Iminooxadiazindionen und/oder anderen Oligomeren basierend auf HDI. Ganz besonders bevorzugt sind Additionsprodukte von e-Caprolacton an Poly(tetrahydrofurane) mit einer Funktionalität von 1,9 bis 2,2 und zahlenmittleren Molmassen von 500 bis 2000 g/mol (insbesondere 600 bis 1400 g/mol), deren zahlenmittlere Gesamtmolmasse von 800 bis 4500 g/Mol, insbesondere von 1000 bis 3000 g/Mol liegt in Verbindung mit Oligomeren, Isocyanuraten und/oder Iminooxadiazindionen basierend auf HDI.

Gemäß einer weiteren bevorzugten Ausführungsform ist vorgesehen, dass die Photopolymer-Formulierung zusätzlich Urethane als Additive enthält, wobei die Urethane insbesondere mit wenigstens einem Fluoratom substituiert sein können.

Bevorzugt können die Urethane die allgemeine Formel (III) 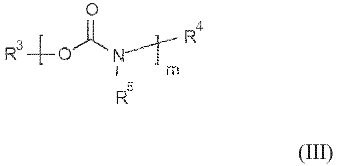 haben, in der m≥1 und m≤8 ist und R³ ein linearer, verzweigter, cyclischer oder heterocyclischer unsubstituierter oder gegebenenfalls auch mit Heteroatomen substituierter organischer Rest und/oder R⁴, R⁵ unabhängig voneinander Wasserstoff sind, wobei bevorzugt mindestens einer der Reste R³, R⁴, R⁵ mit wenigstens einem Fluoratom substituiert ist und besonders bevorzugt R³ ein organischer Rest mit mindestens einem Fluoratom ist. Besonders bevorzugt ist R⁵ ein linearer, verzweigter, cyclischer oder heterocyclischer unsubstituierter oder gegebenenfalls auch mit Heteroatomen wie beispielsweise Fluor substituierter organischer Rest.

Die eingesetzten Photoinitiatoren sind üblicherweise durch aktinische Strahlung aktivierbare Verbindungen, die eine Polymerisation der entsprechender Gruppen auslösen können.

Geeignete Photoinitiatoren sind üblicherweise durch aktinische Strahlung aktivierbare Verbindungen, die eine Polymerisation der entsprechender Gruppen auslösen können. Bei den Photoinitiatoren kann zwischen unimolekularen (Typ I) und bimolekularen (Typ II) Initiatoren unterschieden werden. Des Weiteren werden sie je nach ihrer chemischen Natur in Photoinitiatoren für radikalische, anionische, kationische oder gemischte Art der Polymerisation unterschieden, hier zu existiert ein breiter Stand der Technik.

Typ I-Photoinitiatoren (Norrish-Typ-I) für die radikalische Photopolymerisation bilden beim Bestrahlen durch eine unimolekulare Bindungsspaltung freie Radikale.

Beispiele für Typ I-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bisimidazole, Aroylphosphinoxide, z.B. 2,4,6-Trimethyl-benzoyl-diphenylphosphinoxid, Sulfonium- und Iodoniumsalze.

Typ II-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II-Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II-Photoinitiatoren eingesetzt, für den längerwelligen sichtbaren Lichtbereich kommen überwiegend Typ-II-Photoinitiatoren zum Einsatz.

Auch die in der EP 0 223 587 A beschriebenen Photoinitiatorsysteme, bestehend aus einer Mischung aus einem Ammoniumalkylarylborat und einem oder mehreren Farbstoffen, können als Photoinitiator vom Typ II für die radikalische Polymerisation eingesetzt werden. Als Ammoniumalkylarylborat eignen sich beispielsweise Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat, Tetramethylammonium Triphenylbenzylborat, Tetra(n-hexyl)ammonium (sec-Butyl)triphenylborat, 1-Methyl-3-octylimidazolium Dipentyldiphenylborat und Tetrabutylammonium Tris-(3-chlor-4-methylphenyl)-hexylborat (Cunningham et al., RadTech'98 North America UV/EB Conference Proceedings, Chicago, Apr. 19-22, 1998).

Die für die anionische Polymerisation verwendeten Photoinitiatoren sind in der Regel Typ I-Systeme und leiten sich von Übergangsmetall-Komplexen der ersten Reihe ab. Hier sind beispielsweise Chrom-Salze, wie z.B. trans-Cr(NH₃)₂(NCS)₄⁻ (Kutal et al, Macromolecules 1991, 24, 6872) oder Ferrocenyl-Verbindungen (Yamaguchi et al. Macromolecules 2000, 33, 1152) zu nennen.

Eine weitere Möglichkeit der anionischen Polymerisation besteht in der Verwendung von Farbstoffen, wie Kristallviolett Leukonitril oder Malachitgrün Leukonitril, die durch photolytischen Zerfall Cyanoacrylate polymerisieren können (Neckers et al. Macromolecules 2000, 33, 7761). Dabei wird das Chromophor in die Polymere eingebaut, so dass die resultierenden Polymere durchgefärbt sind.

Die für die kationische Polymerisation verwendbaren Photoinitiatoren bestehen im Wesentlichen aus drei Klassen: Aryldiazonium-Salze, Onium-Salze (hier speziell: Iodonium-, Sulfonium- und Selenonium-Salze) sowie Organometall-Verbindungen. Phenyldiazonium-Salze können unter Bestrahlung sowohl in Gegenwart als auch bei Abwesenheit eines Wasserstoff-Donors ein Kation erzeugen, das die Polymerisation initiiert. Die Effizienz des Gesamtsystems wird durch die Natur des verwendeten Gegenions zur Diazonium-Verbindung bestimmt. Bevorzugt sind hier die wenig reaktiven, aber recht teuren SbF₆⁻, AsF₆⁻ oder PF₆⁻. Für den Einsatz in Beschichtung dünner Filme sind diese Verbindungen in der Regel weniger geeignet, da durch den nach der Belichtung freigesetzten Stickstoff die Oberflächengüte herabgesetzt wird (pinholes) (Li et al., Polymeric Materials Science and Engineering, 2001, 84, 139).

Sehr weit verbreitet und auch in vielerlei Form kommerziell erhältlich sind Onium-Salze, speziell Sulfonium- und Iodonium-Salze. Die Photochemie dieser Verbindungen ist nachhaltig untersucht worden. Die Iodonium-Salze zerfallen nach der Anregung zunächst homolytisch und erzeugen somit ein Radikal und ein Radikalkation, welches zunächst durch H-Abstraktion in ein Kation übergeht, das schließlich ein Proton freisetzt und dadurch die kationische Polymerisation startet (Dektar et al. J. Org. Chem. 1990, 55, 639; J. Org. Chem., 1991, 56. 1838). Dieser Mechanismus ermöglicht den Einsatz von Iodonium-Salzen ebenfalls für die radikalische Photopolymerisation. Hierbei kommt der Wahl des Gegenions erneut eine große Bedeutung zu. Bevorzugt werden ebenfalls SbF₆⁻, AsF₆⁻ oder PF₆⁻ verwendet. Ansonsten ist in dieser Strukturklasse die Wahl der Substitution des Aromaten recht frei und im Wesentlichen durch die Verfügbarkeit geeigneter Startbausteine für die Synthese bestimmt. Bei den Sulfonium-Salzen handelt es sich um Verbindungen, die nach Norrish-Typ II zerfallen (Crivello et al., Macromolecules, 2000, 33, 825). Auch bei den Sulfonium-Salzen kommt der Wahl des Gegenions eine kritische Bedeutung zu, die sich im Wesentlichen in der Härtungsgeschwindigkeit der Polymere äußert. Die besten Ergebnisse werden in der Regel mit SbF₆⁻ Salzen erzielt.

Da die Eigenabsorption von Iodonium- und Sulfonium-Salze bei < 300 nm liegt, sollten diese Verbindungen für die Photopolymerisation mit nahem UV oder kurzwelligem sichtbarem Licht entsprechend sensibilisiert werden. Dies gelingt durch die Verwendung von längerwellig absorbierenden Aromaten wie z.B. Anthracen und Derivaten (Gu et al., Am. Chem. Soc. Polymer Preprints, 2000, 41 (2), 1266) oder Phenothiazin bzw. dessen Derivaten (Hua et al, Macromolecules 2001, 34, 2488-2494).

Es kann vorteilhaft sein, Gemische dieser Sensibilisatoren oder auch Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Bevorzugte Photoinitiatoren sind Mischungen aus Tetrabutylammonium Tetrahexylborat, Tetrabutylammonium Triphenylhexylborat, Tetrabutylammonium Triphenylbutylborat, Tetrabutylammonium Tris-(3-fluorphenyl)-hexylborat ([191726-69-9], CGI 7460, Produkt der BASF SE, Basel, Schweiz) und Tetrabutylammonium Tris-(3-Chlor-4-methylphenyl)-hexylborat ([1147315-11-4], CGI 909, Produkt der BASF SE, Basel, Schweiz) mit Farbstoffen der Formel (I).

Beispiele für kationische Farbstoffe sind Astrazon Orange G, Basic Blue 3, Basic Orange 22, Basic Red 13, Basic Violett 7, Methylenblau, Neu Methylenblau, Azur A, Pyrillium I, Safranin O, Cyanin, Gallocyanin, Brilliant Grün, Kristallviolett, Ethylviolett und Thionin.

Besonders bevorzugt ist, wenn die erfindungsgemäße Photopolymer-Formulierung einen kationischen Farbstoff der Formel F⁺An⁻ enthält.

Unter kationischen Farbstoffen der Formel F⁺ werden bevorzugt solche der folgenden Klassen verstanden: Acridin-Farbstoffe, Xanthen-Farbstoffe, Thioxanthen-Farbstoffe, Phenazin-Farbstoffe, Phenoxazin-Farbstoffe, Phenothiazin-Farbstoffe, Tri(het)arylmethan-Farbstoffe - insbesondere Diamino- und Triamino(het)arylmethan-Farbstoffe, Mono-, Di- und Trimethincyanin-Farbstoffe, Hemicyanin-Farbstoffe, extern kationische Merocyanin-Farbstoffe, extern kationische Neutrocyanin-Farbstoffe, Nullmethin-Farbstoffe - insbesondere Naphtholactam-Farbstoffe, Streptocyanin-Farbstoffe. Solche Farbstoffe sind beispielsweise in H. Berneth in Ullmann's Encyclopedia of Industrial Chemistry, Azine Dyes, Wiley-VCH Verlag, 2008, H. Berneth in Ullmann's Encyclopedia of Industrial Chemistry, Methine Dyes and Pigments, Wiley-VCH Verlag, 2008, T. Gessner, U. Mayer in Ullmann's Encyclopedia of Industrial Chemistry, Triarylmethane and Diarylmethane Dyes, Wiley-VCH Verlag, 2000 beschrieben.

Mit An⁻ ist ein Anion gemeint. Bevorzugte Anionen An⁻ sind insbesondere C₈- bis C₂₅-Alkansulfonat, vorzugsweise C₁₃- bis C₂₅-Alkansulfonat, C₃- bis C₁₈-Perfluoralkansulfonat, C₄- bis C₁₈-Perfluoralkansulfonat, das in der Alkylkette mindestens 3 Wasserstoffatome trägt, C₉- bis C₂₅-Alkanoat, C₉- bis C₂₅-Alkenoat, C₈- bis C₂₅-Alkylsulfat, vorzugsweise C₁₃- bis C₂₅-Alkylsulfat, C₈- bis C₂₅-Alkenylsulfat, vorzugsweise C₁₃- bis C₂₅-Alkenylsulfat, C₃- bis C₁₈-Perfluoralkylsulfat, C₄- bis C₁₈-Perfluoralkylsulfat, das in der Alkylkette mindestens 3 Wasserstoffatome trägt, Polyethersulfate basierend auf mindestens 4 Äquivalenten Ethylenoxid und/oder Äquivalenten 4 Propylenoxid, Bis-C₄- bis C₂₅-Alkyl-, C₅- bis C₇-Cycloalkyl-, C₃- bis C₈-Alkenyl- oder C₇- bis C₁₁-Aralkyl-sulfosuccinat, durch mindestens 8 Fluoratome substituiertes Bis-C₂- bis C₁₀-alkyl-sulfosuccinat, C₈- bis C₂₅-Alkyl-sulfoacetate, durch mindestens einen Rest der Gruppe Halogen, C₄- bis C₂₅-Alkyl, Perfluor-C₁- bis C₈-Alkyl und/oder C₁- bis C₁₂-Alkoxycarbonyl substituiertes Benzolsulfonat, ggf. durch Nitro, Cyano, Hydroxy, C₁- bis C₂₅-Alkyl, C₁- bis C₁₂-Alkoxy, Amino, C₁- bis C₁₂-Alkoxycarbonyl oder Chlor substituiertes Naphthalin- oder Biphenylsulfonat, ggf. durch Nitro, Cyano, Hydroxy, C₁- bis C₂₅-Alkyl, C₁- bis C₁₂-Alkoxy, C₁- bis C₁₂-Alkoxycarbonyl oder Chlor substituiertes Benzol-, Naphthalin- oder Biphenyldisulfonat, durch Dinitro, C₆- bis C₂₅-Alkyl, C₄- bis C₁₂-Alkoxycarbonyl, Benzoyl, Chlorbenzoyl oder Toluoyl substituiertes Benzoat, das Anion der Naphthalindicarbonsäure, Diphenyletherdisulfonat, sulfonierte oder sulfatierte, ggf. mindestens einfach ungesättigte C₈- bis C₂₅-Fettsäureester von aliphatischen C₁- bis C₈-Alkoholen oder Glycerin, Bis-(sulfo-C₂- bis C₆-alkyl)-C₃- bis C₁₂-alkandicarbonsäureester, Bis-(sulfo-C₂- bis C₆-alkyl)-itaconsäureester, (Sulfo-C₂- bis C₆-alkyl)-C₆- bis C₁₈-alkancarbonsäureester, (Sulfo-C₂- bis C₆-alkyl)-acryl- oder methacrylsäureester, ggf. durch bis zu 12 Halogenreste substituiertes Triscatecholphosphat, ein Anion der Gruppe Tetraphenylborat, Cyanotriphenylborat, Tetraphenoxyborat, C₄- bis C₁₂-Alkyl-triphenylborat, deren Phenyl- oder Phenoxy-Reste durch Halogen, C₁- bis C₄-Alkyl und/oder C₁- bis C₄-Alkoxy substituiert sein können, C₄- bis C₁₂-Alkyl-trinaphthylborat, Tetra-C₁- bis C₂₀-alkoxyborat, 7,8- oder 7,9-Dicarba-nido-undecaborat(1-) oder (2-), die gegebenenfalls an den B- und/oder C-Atomen durch eine oder zwei C₁- bis C₁₂-Alkyl- oder Phenyl-Gruppen substituiert sind, Dodecahydro-dicarbadodecaborat(2-) oder B-C₁- bis C₁₂-Alkyl-C-phenyl-dodecahydro-dicarbadodecaborat(1-) steht, wobei bei mehrwertigen Anionen wie Naphthalindisulfonat An⁻ für ein Äquivalent dieses Anions steht, und wobei die Alkan- und Alkylgruppen verzweigt sein können und/oder durch Halogen, Cyano, Methoxy, Ethoxy, Methoxycarbonyl oder Ethoxycarbonyl substituiert sein können.

Besonders bevorzugte Anionen sind sec-C₁₁- bis C₁₈-Alkansulfonat, C₁₃- bis C₂₅-Alkylsulfat, verzweigtes C₈- bis C₂₅-Alkylsulfat, ggf. verzweigtes Bis-C₆- bis C₂₅-alkylsulfosuccinat, sec- oder tert.-C₄- bis C₂₅-Alkylbenzolsulfonat, sulfonierte oder sulfatierte, ggf. mindestens einfach ungesättigte C₈- bis C₂₅-Fettsäureester von aliphatischen C₁- bis C₈-Alkoholen oder Glycerin, Bis-(sulfo-C₂- bis C₆-alkyl)-C₃- bis C₁₂-alkandicarbonsäureester, (Sulfo-C₂- bis C₆-alkyl)-C₆- bis C₁₈-alkancarbonsäureester, durch bis zu 12 Halogenreste substituiertes Triscatecholphosphat, Cyanotriphenylborat, Tetraphenoxyborat, Butyltriphenylborat.

Bevorzugt ist auch, wenn das Anion An⁻ des Farbstoffs einen AClogP im Bereich von 1-30, besonders bevorzugt im Bereich von 1-12 und insbesondere bevorzugt im Bereich von 1-6,5 aufweist. Der AClogP wird nach J. Comput. Aid. Mol. Des. 2005, 19, 453; Virtual Computational Chemistry Laboratory, http://www.vcclab.org berechnet.

Ganz besonders bevorzugt ist, wenn der Photoinitiator eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst.

Bevorzugt ist auch, wenn wenigstens ein für eine Laserlichtfarbe ausgewählt aus blau, grün und rot geeigneter Photoinitiator in der Photopolymer-Formulierung enthalten ist.

Weiter bevorzugt ist auch, wenn die Photopolymer-Formulierung für wenigstens zwei Laserlichtfarben ausgewählt aus blau, grün und rot je einen geeigneten Photoinitiator enthält.

Ganz besonders bevorzugt ist schließlich, wenn die Photopolymer-Formulierung für jede der Laserfarben blau, grün und rot jeweils einen geeigneten Photoinitiator enthält.

Die Schicht P kann bevorzugt eine Schichtdicke von 5 µm bis 100 µm, besonders bevorzugt von 5 µm bis 30 µm, ganz besonders bevorzugt von 10 µm bis 25 µm aufweisen.

Die Schicht P kann in bevorzugten Ausführungsformen der Erfindung auf eine Substratschicht S aufgebracht sein. Bevorzugte Materialien oder Materialverbünde des Substrats (S) basieren auf transparenten Folien auf Basis von Polycarbonat (PC), Polyethylenterephthalat (PET), Polybutylenterephthalat (PBT), Polyethylen, Polypropylen, Celluloseacetate, Cellulosehydrat, Cellulosenitrat, Cycloolefinpolymere, Polystyrol, Polyepoxide, Polysulfon, Cellulosetriacetat (CTA), Polyamid, Polymethylmethacrylat, Polyvinylchlorid, Polyvinylbutyral oder Polydicyclopentadien oder deren Mischungen. Bevorzugt basieren sie auf solchen Folien, die hohe optische Güte aufweisen und einen guten Brechungsindexmatch zur verwendeten Photopolymerformulierung. Besonders bevorzugt basieren sie auf PC, PET und CTA.

Prinzipiell können auch Materialverbünde wie Folienlaminate oder Coextrudate für das Substrat (S) eingesetzt werden. Bevorzugte Materialverbünde sind Duplex- und Triplexfolien aufgebaut nach einem der Schemata A/B, A/B/A oder A/B/C. Besonders bevorzugt sind PC/PET, PET/PC/PET und PC/TPU (TPU = Thermoplastisches Polyurethan).

Die Schicht S kann 15 bis 375 µm, bevorzugt 23 µm bis 175 µm, besonders bevorzugt 36 µm bis 125 µm dick sein.

In die Schicht P wird ein Volumenhologramm einbelichtet. Dies kann ein Reflektions-, ein Transmissions- oder ein Edgelit Hologramm sein. Die Einbelichtung wird mit einem monochromatischen Laser durchgeführt, wobei mittels eines durch einen Strahlteiler und einer Aufweitung des Laserstrahls ein Interferenzfeld erzeugt wird. Der Laser kann dabei verschiedenen Farben (Lichtfrequenzen) erzeugen, vorzugsweise eine blaue, rote, grüne oder gelbe Emissionswellenlänge verwendet werden kann. Ebenfalls ist es möglich gleichzeitig und nacheinander verschiedenfarbige Laser zu verwenden. So ist es damit möglich zwei- oder mehrfarbige Reflektionshologramme zu erzeugen.

In der Schicht P können ein oder mehrere Hologramme an derselben Stelle oder nebeneinander einbelichtet werden. Belichtet man an derselben Stelle ein, so können unterschiedliche Bildinhalte einbelichtet werden. Ebenfalls können auch verschiedene Ansichten eines Objektes mit leicht variierenden Rekonstruktionswinkeln einbelichtet werden, so dass Stereogramme entstehen. Ebenfalls ist es möglich versteckte Hologramme und Mikrotexte einzubelichten. Gleichermaßen ist es im Falle von Transmissionshologrammen möglich mehrere lichtleitende Funktionen und/ oder lichtleitende Funktionen für verschiedene spektrale Bereiche einzubelichten.

### Beschreibung des strahlungshärtenden Harzes I)

Bevorzugt umfasst das strahlungshärtende Harz I) wenigstens ein polyester-, polyether-, polycarbonat- und / oder polyurethanhaltiges Bindemittel mit strahlungshärtenden, insbesondere radikalisch polymerisierbaren Gruppen, wobei es sich bei den radikalisch polymerisierbaren Gruppen bevorzugt um Acryl-, Methacryl-, Allyl-, Vinyl-, Maleinyl- und / oder Fumarylgruppen handelt, besonders bevorzugt um Acryl- und / oder Methacrylgruppen und ganz besonders bevorzugt um Acrylgruppen. (Meth)acrylgruppenhaltige Bindemittel werden in der Regel mittels Veresterung von (Meth)Acrylsäure mit Polyolen (siehe z.B. DE 000019834360A1, EP 000000900778B1) oder mit Poly-oxalkylierten Polyolen nach DE 10 2007 037140 A1 hergestellt. Je nach den enthaltenen chemischen Gruppen der Polyole spricht man von Polyesteracrylaten, Polyetheracrylaten oder Polycarbonatacrylaten. Sind mehrere Gruppentypen enthalten, spricht man auch von z.B. Polyether/esteracrylaten.

Ebenfalls können auch (Meth)acrylgruppenhaltige Bindemittel mit Di- oder Poly-isocyanaten zu höhermolekularen Harzen vorvernetzt werden, wodurch zusätzlich Urethangruppen eingeführt werden. Derartige Harze nennt man Urethanacrylate. Verwendet man aliphatische Isocyanate, dann nennt man diese Produkte auch aliphatische Urethanacrylate. Verwendet man aromatische Isocyanate, dann nennt man diese Produkte auch aromatische Urethanacrylate. Ebenfalls unter Urethanacrylaten versteht man Addukte aus Di- und Polyisocyanaten und Hydroxygruppen funktionellen Acrylsäureestern, wie z.B. Hydroxyethyl-, Hydroxypropyl- und Hydroxybutylacrylat, wie sie beispielsweise in DE 19944156 A1 und DE 10143630 A1 beschrieben sind.

Vorteilhafte niedrigviskose Urethanacrylate, die zusätzlich Allophanatgruppen enthalten, können ebenso verwendet werden. Diese werden unter spezieller Katalyse aus Isocyanaten und intermediär hergestellten Urethanacrylaten nach u.a. DE 102004048873 A1 und DE 102009008569 A1 verfügbar gemacht und sind ebenfalls gut geeignet.

Weiter verwendbare Bindemittel sind Epoxyacrylate, die durch Umsetzung von Epoxyharzen mit Acrylsäure hergestellt werden können. Epoxyharze sind Umsetzungprodukte von niedermolekularen Diepoxyden, wie sie u.a. aus Bisphenol-A und Epichlorhydrin in verschiedenen Abmischungsverhältnissen erhältlich sind. Andere Epoxyacrylate auf Basis anderer aliphatischer oder aromatischer Alkohole/Phenole mit Epichlorhydrin und anschließender Umsetzung mit Acrylsäure sind ebenfalls verwendbar.

Bevorzugt ist, wenn das strahlungshärtende Harz I) wenigstens eine Verbindung aus der Gruppe der Polyetheracrylate, Polyesteracrylate, aliphatische Urethanacrylate, aromatische Urethanacrylate und Epoxyacrylate und bevorzugt wenigstens ein aliphatisches Urethanacrylat und / oder wenigstens ein aromatisches Urethanacrylat enthält.

Gemäß einer weiteren bevorzugten Ausführungsform der Erfindung ist vorgesehen, dass in dem strahlungshärtenden Harz I) ≤ 4 Gew.-% Verbindungen mit einem gewichtsmittleren Molekulargewicht < 500 und ≥ 77 Ges.-% Verbindungen mit einem gewichtsmittleren Molekulargewicht > 1000 und bevorzugt ≤ 3,5 Gew.% Verbindungen mit einem gewichtsmittleren Molekulargewicht < 500 und ≥ 79 Ges.-% Verbindungen mit einem gewichtsmittleren Molekulargewicht > 1000 enthalten sind. Ebenfalls können auch Abmischungen verschiedener strahlungshärtender Harze I) verwendet werden. Für diese Mischungen gelten dann die oben genannten geeigneten gewichtsmittleren Molekulargewichtsanteile analog und beziehen sich auf die gemittelten gewichtsmittleren Molekulargewichtsanteile dieser Mischungen.

In der Mischung zur Erzeugung der Schutzschicht werden zu mindestens 55 Gew.-%, bevorzugt zu mindestens 60 Gew.-% eines oder mehrerer strahlungshärtender Harze I) verwendet, weiter bevorzugt zu mindestens 75 Gew.-%, besonders bevorzugt zu mindestens 80 Gew.-%.

### Beschreibung des multifunktionellen strahlungshärtenden Harzes II)

Das multifunktionelle strahlungshärtende Harz II) enthält oder besteht bevorzugt aus einer oder mehreren strahlungshärtenden Verbindungen mit mindestens jeweils zwei strahlungshärtende, insbesondere radikalisch polymerisierbare Gruppen pro Molekül, wobei es sich bei den radikalisch polymerisierbaren Gruppen bevorzugt um Acryl-, Methacryl-, Allyl-, Vinyl-, Maleinyl- und / oder Fumarylgruppen handelt, besonders bevorzugt um Acryl- und / oder Methacrylgruppen und ganz besonders bevorzugt um Acrylgruppen.

Bevorzugt enthalten die im multifunktionellen strahlungshärtenden Harz II) eingesetzten Verbindungen mindestens drei und/ oder wenigstens vier strahlungshärtende, insbesondere radikalisch polymerisierbare Gruppen pro Molekül. Besonders bevorzugt enthalten die im multifunktionellen strahlungshärtenden Harz II) eingesetzten Verbindungen genau drei und/ oder genau vier strahlungshärtende, insbesondere radikalisch polymerisierbare Gruppen pro Molekül.

Bevorzugt ist der Einsatz von multifunktionellen Acrylaten und/ oder Methacrylaten, besonders bevorzugt mindestens di-funktionellen, insbesondere bevorzugt mindestens tri-funktionellen, und ganz besonders bevorzugt tri- und/ oder tetra-funktionellen Bestandteilen, wobei mit "funktionell" die Anzahl der jeweils strahlungshärtenden reaktiven Gruppen, bevorzugt in Form von Doppelbindungen, gemeint ist.

Beispiele für besonders geeignete multifunktionelle Acrylate sind u.a. Tris-[2-(acryloyloxy)ethyl]-isocyanurat,Trimethylolpropantriacrylat, Di(trimethylol)tetraacrylat, Pentaerythritol triacrylate, Pentaerythritol tetraacrylate, Glycerolpropoxylattriacrylat with 0,3-9 Propoxyeinheiten, Glycerolethoxylattriacrylat mit 0,3-9 Ethoxyeinheiten, Dipentaerythrit-hexaacrylat.

Ebenfalls können auch Zubereitungen verschiedener multifunktioneller strahlungshärtender Harze II) verwendet werden.

In der Mischung zur Erzeugung der Schutzschicht werden maximal 35%, vorteilhafterweise 3 Gew.-% bis 33 Gew.-% eines oder mehrerer multifunktioneller strahlungshärtender Harze II) eingesetzt, bevorzugt 5 Gew.-% bis 15 Gew.-%.

### Beschreibung des Photoinitiatorsystems III)

Das Photoinitiatorsystem III) umfasst Initiatoren, die eine radikalische Polymerisation nach Bestrahlen mit energiereicher Strahlung wie zum Beispiel UV-Licht auslösen können. Solche Photoinitiatoren sind beispielsweise beschrieben in P. K. T. Oldring (Ed.), Chemistry & Technology of UV & EB Formulations For Coatings, Inks & Paints, Vol. 3, 1991, SITA Technology, London, S. 61-325. Bevorzugt kann das Photoinitiatorsystem III) wenigstens eine Verbindung aus der Gruppe 2-Hydroxyphenylketone, insbesondere 1-Hydroxycyclohexyl-phenylketon, Benzilketale, insbesondere Benzildimethylketal, Acylphosphinoxide, insbesondere Bis-(2,4,6-trimethylbenzoyl)-phenylphosphinoxid, Diacylphosphinoxide, Benzophenon und dessen Derivate umfassen. Sie können allein oder in Mischung gegebenenfalls auch zusammen mit weiteren Beschleunigern oder Coinitiatoren als Zusatz berechnet auf Festkörper des Beschichtungssystems in Mengen von 0,1 bis 10 Gew.-%, bevorzugt 0,2 bis 7 Gew.-%, besonders bevorzugt 0,5 bis 5 Gew.-% verwendet werden.

### Beschreibung des strahlungshärtenden Harzes IV)

Optional können in der Formulierung ≤ 10 Gew.% eines weiteren niedermolekularen strahlungshärtenden Harzes IV) enthalten sein.

Das strahlungshärtende Harz IV) ist vorzugsweise ausgewählt aus einer oder mehreren strahlungshärtenden Verbindungen mit radikalisch polymerisierbaren Gruppen, wobei es sich bei den radikalisch polymerisierbaren Gruppen bevorzugt um Acryl-, Methacryl-, Allyl-, Vinyl-, Maleinyl- und / oder Fumarylgruppen handelt, besonders bevorzugt um Acryl- und / oder Methacrylgruppen.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobornylmethacrylat, Tetrahydrofurfurylacrylat, Phenylacrylat, Phenylmethacrylat, p-Chlorphenylacrylat, p-Chlorphenylmethacrylat, p-Bromphenylacrylat, p-Bromphenyl-methacrylat, 2,4,6-Trichlorphenylacrylat, 2,4,6-Trichlorphenylmethacrylat, 2,4,6-Tribromphenyl-acrylat, 2,4,6-Tribromphenylmethacrylat, Pentachlorphenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Propan-2,2-diylbis[(2,6-dibrom-4,1-phenylen)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, Ethandioldiacrylat, Butandioldiacrylat, Hexandioldiacrylat, Diethylenglycoldiacrylat, Triethylenglycoldiacrylat, N-Carbazolylacrylate, um nur eine Auswahl verwendbarer Acrylate und Methacrylate zu nennen.

Bevorzugt sind in der Schutzschicht ≥ 0 Gew.-% und ≤ 10 Gew.-% des strahlungshärtenden Harzes IV) enthalten, insbesondere 0,01 bis 10 Gew.-%, besonders bevorzugt ≥ 3 Gew.-% und ≤ 10 Gew.-%.

Weiterhin kann in der Mischung ein oder mehrere Reaktivverdünner eingesetzt werden. Als Reaktivverdünner können Verbindungen mitverwendet werden, die bei der UV-Härtung ebenfalls (co)polymerisieren und somit in das Polymernetzwerk eingebaut werden und gegenüber NCO-Gruppen inert sind. Solche Reaktivverdünner sind in P. K. T. Oldring (Ed.), Chemistry & Techno¬logy, of UV & EB Formulations For Coatings, Inks & Paints, Vol. 2, 1991, SITA Technology, London, S. 237-285 exemplarisch beschrieben. Dies können Ester der Acrylsäure oder Methacrylsäure, bevorzugt der Acrylsäure mit mono- oder mehrfachfunktionellen Alkoholen sein. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, 1,2-Propandiol, 1,3-Propandiol, Diethylenglykol, Dipropylenglykol, die isomeren Butandiole, Neopentylglykol, 1,6-Hexandiol, 2-Ethylhexandiol und Tripropylenglykol oder auch alkoxylierte Derivate dieser Alkohole. Bevorzugte zweiwertige Alkohole sind 1,6-Hexandiol, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate. Ein geeigneter sechswertiger Alkohol ist Dipentaerythrit oder dessen alkoxylierte Derivate. Besonders bevorzugt sind die alkoxylierten Derivate der genannten drei- bis sechswertigen Alkohole.

Im Übrigen kann die Mischung zur Erzeugung der Schutzschicht weitere Additive enthalten, die auch je nach Auftragsart zusätzlich verwendet werden: Verlaufshilfsmittel, wie Polyacrylate, Silikone, hybride Materialien, Antistatikagenzien, Lösungsmittel, Füllmittel wie Natriumcarbonat und/ oder Kalziumkarbonat, Antiblockmittel wie Silica, Lichtschutzmittel, insbesondere UV-Absorber, HALS-Amine, Phosphonate, Pigmente und/ oder Farbstoffe.

Bevorzugt haben die im strahlungshärtenden Harz IV) eingesetzten Verbindungen sowie die verwendeten Reaktivverdünner unabhängig voneinander ein gewichtsmittleres Molekulargewicht von ≤ 800 g/mol, besonders bevorzugt von ≤ 500 g/mol und ganz besonders bevorzugt von ≤ 300 g/mol. Bevorzugte Bereiche sind 72 bis 800 g/mol, vorzugsweise von 72 g/mol bis 500 g/mol, bevorzugt 85 g/mol bis 300 g/mol. Vorzugsweise besitzt das strahlungshärtende Harz IV) ein gewichtsmittleres Molekulargewicht von wenigstens 72 g/mol, beispielsweise Acrylsäure. Vorzugsweise besitzt der verwendete Reaktivverdünner eine molekulare Masse von wenigstens 62 g/mol, beispielsweise Ethylenglycol.

Bevorzugt sind in der Schutzschicht in der Summe aus Harz IV) und Reaktivverdünner ≥ 0 Gew.-% und ≤ 10 Gew.% beider Komponenten enthalten, insbesondere 0,01 bis 10 Gew.-%, besonders bevorzugt ≥ 3 Gew.-% und ≤ 10 Gew.-%.

### Die Herstellung des erfindungsgemäßen Schichtaufbaus

Ein weiterer Gegenstand der Erfindung ist ein Verfahren zur Herstellung eines erfindungsgemäßen Schichtaufbaus, bei dem auf die belichtete Photopolymerschicht eine Mischung wenigstens umfassend das strahlungshärtende Harz I), das multifunktionelle strahlungshärtende Harz II), das Photoinitiatorsystem III) und optional das strahlungshärtende Harz IV) aufgebracht und ausgehärtet wird, wobei in dem strahlungshärtenden Harz I) ≤ 5 Gew.-% Verbindungen mit einem gewichtsmittleren Molekulargewicht < 500 und ≥ 75 Ges.-% Verbindungen mit einem gewichtsmittleren Molekulargewicht > 1000 enthalten sind, das multifunktionelle strahlungshärtende Harz II) mindestens ein Acrylat mit wenigstens zwei strahlungshärtende Gruppen umfasst oder daraus besteht und in der Mischung mindestens 55 Gew.-% des strahlungshärtenden Harzes I) und maximal 35 Gew.-% des multifunktionellen strahlungshärtenden Harzes II) enthalten sind.

Die Aufbringung der Mischung erfolgt zweckmäßigerweise mittels üblicher Applikationstechniken von Flüssigkeiten auf die ein oder mehrere Hologramme enthaltende Photopolymerschicht. Übliche Verfahren sind flächig, kontinuierliche applizierende Techniken wie die dem Fachmann bekannte Rakelverfahren (wie Doctor Blade, Walzenrakel / knife-over-Roll, comma-bar, Luftrakel, Gummituchrakel, u.a), Düsensysteme (z.B. Schlitzdüse), Vorhanggießer (curtain coater), Walzenantragsverfahren (Rasterwalzen, Reverse Roll Coater), Tauchverfahren, Siebdruck bzw. Siebapplikation.

Verwendet man die Schutzschicht als direkte Versiegelung für die Photopolymerschicht, so folgt nach dem Applizieren die Strahlungshärtung mittels UV-Strahlung. Hierzu verwendet man Hochdruckdampflampen, die mit unterschiedlichen Metalllampendotierungen zur Anpassung derer Emissionsspektren dem verwendeten Photoinitiatorsystem III) angepasst werden können. Es kann dabei vorteilhaft sein, die Wärmestrahlung der UV-Hochdruckdampflampen durch dichroitische Reflektoren oder dergleichen von der strahlungshärtenden Schicht abzuhalten.

Nach einer weiteren bevorzugten Ausgestaltung der Erfindung kann in der Weise vorgegangen werden, dass zunächst die erfindungsgemäße Mischung auf eine glatte Substratoberfläche aufgetragen und dann die Photopolymerschicht, beispielsweise ein gebleichtes Photopolymer bzw. eine Photopolymerschicht enthaltend ein Transmissions- oder Reflexionshologramm, auf den noch flüssigen Lack aufgelegt und anschließend durch Anwendung von Druck angepresst wird, wobei ein Laminat entsteht. Das Verpressen kann beispielsweise mit einem Gummihandroller und/ oder einem Rollenlaminator erfolgen. Anschließend erfolgt die Aushärtung des Lackes beispielsweise durch UV-Strahlung. Nach Aushärten ist der Lack fest mit dem Photopolymer bzw. Hologramm verbunden und lässt sich problemlos und zerstörungsfrei vom Substrat lösen. Durch die Glattheit der Substratunterlage, die in diesem Fall wie eine Transferunterlage wirkt, erhält man eine Lackschicht, die nahezu frei von Oberflächenstörungen ist. Die Oberflächenqualität der Transferunterlage wird dabei in der nach Abziehen der lackierten Photopolymerschicht freien Lackoberfläche repliziert. Generell ist als Transferunterlage jede glatte Oberfläche geeignet, wie zum Beispiel Glas, lackiertes Papier, andere glatte Kunststofffolien oder Metalloberflächen. Als glatte Substratoberfläche ist eine Glasoberfläche in besonderem Maße geeignet, da Glas einerseits die erforderliche glatte Oberfläche besitzt und zudem in ausreichendem Maße für Strahlung zum Aushärten der Mischung durchlässig ist, wie beispielsweise UV-Strahlung. So kann auch eine wenig UV-durchlässige Photopolymerschicht laminiert werden, indem der Belichtungsschritt der erfindungsgemäßen Mischung durch das Glassubstrat erfolgt, also von der gegenüberliegenden Flachseite der Photopolymerschicht. Folglich umfasst ein besonders bevorzugtes Verfahren die Schritte, dass die Mischung auf eine Transferoberfläche, bevorzugt eine optisch transparente Transferoberfläche, insbesondere bevorzugt auf eine Glasoberfläche aufgetragen wird, die Photopolymerschicht auf die noch nicht ausgehärtete Mischung aufgebracht und angepresst wird, wobei die Aushärtung unter Ausbildung der Schutzschicht insbesondere mittels Strahlungshärtung durch die Photopolymerschicht und/ oder die Transferoberfläche erfolgt, vorzugsweise durch die Transferoberfläche, und anschließend ein Laminat aus der Schutzschicht und der Photopolymerschicht von der Transferoberfläche abgezogen wird.

Ebenfalls ist es natürlich möglich in einem Walzenverfahren schnell und effizient den erfindungsgemäßen Lack zu applizieren. Dabei wird vorzugsweise
1. in einem Rolle zu Rolle-Verfahren der Hologramm enthaltende Photopolymerfilm transportiert;
2. der Lack mittels eines Rakels, eines Düsensystems, eines Vorhanggießers, eines Walzenantragssystems, eines Curtain-Coaters, eines Tauchverfahrens, eines Siebdrucks oder einer Siebapplikation darauf aufgetragen;
3. unter einer transparenten oder intransparenten Walze unter einem definierten Abstand, der kleiner ist als die Naßschichtdicke hindurchgefahren und gleichzeitig mit UV Licht gehärtet.

Verwendet man transparente Walzen (z.B. aus Glas, Kunststoff), so kann man die Strahlungsquelle zum Härten des Lackes in die Walze positionieren. Bei intransparenten Walze (z.B. aus Metall) erfolgt die Härtung immer von der Photopolymerseite.

Die Walzen können strukturiert sein, sodass eine spezielle Oberflächenstruktur auf dem Lack verbleibt. Die Strukturierung kann eingraviert sein, oder eine spezielle Oberfläche mit niedriger Oberflächenspannung (z.B. Silikon, Teflon) aufweisen. Dies kann vorteilhaft sein, wenn man spezielle Hafteigenschaften zu nachfolgend aufgetragenen oder laminierten Schichten erreichen möchte. Ebenfalls ist es möglich damit spezielle optische Eigenschaften, wie eine Mattierung, einen Oberflächenstreuer, eine Antireflexschicht, einen optischen Abstandshalter oder dergleichen aufzubauen.

Derartige Güter sind insbesondere für Projektionsschirme, spezielle optische Folien für elektronische Displays, für bildgebende 3D-Hologramme in Point of Sale bzw. Werbezwecke, für Lichtschutz in Außenanwendungen, für Solarzellen, für OLED-Schichtaufbauten und auch generell für optische Elemente von Vorteil.

Die erfindungsgemäße Mischung zur Erzeugung der Schutzschicht besitzt auch Klebstoffeigenschaften und kann insofern als strahlungshärtbarer Klebstoff verwendet werden. So kann mit Hilfe der Mischung die Photopolymerschicht mit einer Abdeckung verklebt werden. Insofern wird nach einer weiteren Ausgestaltung des erfindungsgemäßen Verfahrens die Mischung vor dem Aushärten mit einer Abdeckschicht abgedeckt und anschließend ausgehärtet, wobei die Aushärtung insbesondere mittels Strahlungshärtung durch die Photopolymerschicht und/ oder die Abdeckschicht erfolgt.

Ein weiterer Gegenstand der vorliegenden Erfindung betrifft die Verwendung des erfindungsgemäßen Schichtaufbaus in einem Etikett, in einer Sicherheitskarte, in einer Banknote, in einem Druckartikel, in einem optischen Aufbau, in einem elektronischen Display oder einem anderen Gegenstand mit mehrschichtigem Aufbau und einer holographisch optischen Schicht, bevorzugt umfassend mindestens ein Hologramm, das in der Photopolymerschicht einbelichtet wurde.

Häufig wird in den genannten Anwendungen, besonders bei Etiketten, Aufklebern, optischen Aufbauten und in der bildgebenden Holografie (3D-Bilder und -Poster) ein (Haft)-Klebstoff ("pressure sensitive adhesive") zum Verkleben der Hologramme verwendet. Übliche Haft-Klebstoffe sind Polyacrylatklebstoffe, die bei den bislang bekannten Schichtaufbauten durch Quellen oder Schrumpfen der holografischen Gitter zu einer starken Farbverschiebung im Hologramm oder einer starken Verschiebung des Betrachtungswinkels führen können. Durch den erfindungsgemäßen Schichtaufbau kann dieser nachteilige Einfluss des (Haft)-klebstoffes auf das Hologramm unterbunden werden, indem die Schutzschicht zwischen Hologramm enthaltender Photopolymerschicht und der (Haft)-Klebstoffschicht positioniert wird. Die Applikation des (Haft-)Klebstoffes erfolgt dabei mittels Flüssigantragverfahren oder mittels eines Klebstoffschichttransferverfahrens auf die Schutzschicht. Ebenfalls kann die Schutzschicht auch direkt auf den auf einem Transferfilm vorliegenden (Haft)-Klebstoffschicht appliziert werden, anschließend die das Hologramm enthaltende Photopolymerschicht mittels Druck auflaminiert und dann durch UV-Strahlung gehärtet werden.

Das Klebstoffschichttransferverfahren eignet sich insbesondere auch, wenn bei der Herstellung der Etiketten oder Aufklebern keine flüssigen Chemikalien gehandhabt werden sollen oder wenn die Schichtdicke der (Haft-)Klebstoffschicht präzise eingestellt werden soll. Dabei wird in einem vorgelagerten Schritt die (Haft-)Klebstoffschicht auf ein wiederablösbares Substrat appliziert und ggf. mit einer weiteren ablösbaren Kaschierfolie geschützt. Im Klebstoffschichttransferverfahren wird dann die Kaschierfolie abgezogen und der (Haft-)Klebstoff direkt auf die gehärtete Schutzschicht auflaminiert. Meistens verbleibt das Substrat des (Haft-)klebstoffes als Transfersubstrat bis zur Applikation der Etikette/des Aufklebers. Auf die Kaschierfolie kann verzichtet werden, wenn die Rückseite des Transfersubstrats ebenfalls antihaftend ausgerüstet ist.

Es kann je nach Klebstofftype vorteilhaft sein, die UV-Strahlungshärtung der Schutzschicht vor oder nach der Applikation des (Haft-)Klebstoffes durchzuführen, wobei es in der Regel bevorzugt ist, die Härtung vor der Applikation des (Haft-)Klebstoffes durchzuführen. Ebenfalls ist die Applikation mittels Transferklebstofffilms bevorzugt.

Für die Verwendung eines Mehrschichtaufbaus aus Photopolymerschicht und Schutzschicht und weiteren Schichten in einem Etikett, in einer Sicherheitskarte, in einer Banknote, in einem Druckartikel, in einem optischen Aufbau, in einem elektronischen Display etc. kann es von Vorteil sein, die Schutzschicht unmittelbar als Verklebungslösung für die Photopolymerschicht zu verwenden. Dies gilt insbesondere für Substrate aus Papier, Thermoplasten, Duroplasten, Metallen, Glas, Holz, lackierten, beschichteten, laminierten oder bedruckten Substraten etc. Es kann dabei von Vorteil sein, die Substrate vorzubehandeln. Bespiele hierfür sind chemische Vorbehandlung mit Lösemitteln, zur Vorreinigung wie Entfettung, physikalische Vorbehandlung wie Plasmabehandlung oder Koronabehandlung, Strahlungsaktivierung, Abscheidung oder Auftragung haftvermittelnder Schichten. Die UV-Strahlungshärtung der Schutzschicht wird dabei nach der Applikation auf derartige Substrate durchgeführt. Die Applikation erfolgt entweder durch Nassauftrag der Formulierung der Schutzschicht auf das Photopolymer und anschließender direkter Lamination des Substrats oder durch Nassauftrag der Formulierung der Schutzschicht auf das Substrat und anschließender direkter Lamination des Photopolymers oder durch gleichzeitigen Auftrag, z.B. in einem Laminator. Bei dicken also nicht UV transparenten oder gar intransparenten Schichten kann es von Vorteil sein, andere hochenergetische Strahlung wie Elektronen- oder Röntgenstrahlung zur Härtung der Schutzschicht zu verwenden. Zweckmäßigerweise wird das Photoinitiatorsystem III) auf die jeweils verwendete Strahlungsart abgestimmt.

Gemäß einer weiteren bevorzugten Ausführungsform der Erfindung kann in die Photopolymerschicht ein Hologramm einbelichtet sein. Die Hologramme können beliebige holografische Volumenhologramme sein, die nach dem Fachmann bekannten Verfahren aufgezeichnet wurden. Darunter fallen unter anderem monochromatisch belichtete oder mit mehreren Lasern unterschiedlicher Emissionswellenlänge erzeugte mehr- oder vollfarbige Reflektionshologramme, In-Line (Gabor) Hologramme, Off-Axis Hologramme, Full-Aperture Transfer Hologramme, Weißlicht-Transmissionshologramme ("Regenbogenhologramme"), Lippmannhologramme, Denisyukhologramme, Off-Axis Reflektionshologramme, Edge-Lit Hologramme sowie holographische Stereogramme.

Mögliche optische Funktionen der Hologramme, entsprechen den optische Funktionen von Lichtelementen wie Linsen, Spiegel, Umlenkspiegel, Filter, Streuscheiben (mit und ohne eingeschränkte Sichtzone (eye box), Beugungselemente, Lichtleiter, Lichtlenker (waveguides), Projektionsscheiben, Masken, optische Prismen zur spektralen chromatischen Aufspaltung, Lichtlenkung und Lichtführung sowie Lichtformung. Häufig zeigen diese optischen Elemente eine Frequenzselektivität, je nachdem wie die Hologramme belichtet wurden und welche Dimensionen das Hologramm hat.

Zudem können mittels der erfindungsgemäßen Schichtaufbauten auch holographische Bilder oder Darstellungen hergestellt werden, wie zum Beispiel für persönliche Portraits, biometrische Darstellungen in Sicherheitsdokumenten, oder allgemein von Bilder oder Bildstrukturen für Werbung, Sicherheitslabels, Markenschutz, Markenbranding, Etiketten, Designelementen, Dekorationen, Illustrationen, Sammelkarten, Bilder und dergleichen sowie Bilder, die digitale Daten repräsentieren können u.a. auch in Kombination mit den zuvor dargestellten Produkten. Holographische Bilder können den Eindruck eines dreidimensionalen Bildes haben, sie können aber auch Bildsequenzen, kurze Filme oder eine Anzahl von verschiedenen Objekten darstellen, je nachdem aus welchem Winkel, mit welcher (auch bewegten) Lichtquelle etc. diese beleuchtet werden. Aufgrund dieser vielfältigen Designmöglichkeiten stellen Hologramme, insbesondere Volumenhologramme, eine attraktive technische Lösung für die oben genannten Anwendung dar.

Weiterhin kann die erfindungsgemäße Schutzschicht für eine weitere Gestaltung beispielsweise eine eingefärbt werden, insbesondere mit einem Fluoreszenzmarker. Dabei erfolgt die Anregung im UV-Bereich und die Emission im Sichtbaren Spektralbereich. Alternativ oder zusätzlich können in der Schutzschicht auch forensische Merkmale untergebracht werden.

### Beispiele:

Die Erfindung wird im Folgenden anhand von Beispielen und den Fign. 1 bis 4 näher erläutert. In den Figuren zeigt
- Fig. 1: den schematischen Aufbau einer Folienbeschichtungsanlage zur Herstellung einer Photopolymerschicht,
- Fig. 2: eine Apparatur zur Erzeugung eines Hologramms in der Photopolymerschicht,
- Fig. 3: die Form eines mit einer Apparatur gemäß Fig. 2 geschriebenen Hologramms, sowie
- Fig. 4: das Spektrum einer zum Bleichen verwendeten UV-Lampe (Herstellerangabe).

### Einsatzstoffe:

### Einsatzstoffe für die Photopolymerschichten:

### Komponente A:

experimentelles Produkt der Bayer MaterialScience AG, Leverkusen, Deutschland, die Herstellung ist unten beschrieben.
Komponente B1 (Phosphorthioyltris(oxy-4,1-phenyleniminocarbonyloxyethan-2,1-diyl)-triacrylat):
   experimentelles Produkt der Bayer MaterialScience AG, Leverkusen, Deutschland, die Herstellung ist unten beschrieben.
Komponente B2 (2-({[3-(Methylsulfanyl)phenyl]carbamoyl}oxy)ethylprop-2-enoat):
   experimentelles Produkt der Bayer MaterialScience AG, Leverkusen, Deutschland, die Herstellung ist unten beschrieben.
Komponente C (Bis(2,2,3,3,4,4,5,5,6,6,7,7-dodecafluorheptyl)- (2,2,4-trimethylhexan- 1,6-diyl) biscarbamat):
   experimentelles Produkt der Bayer MaterialScience AG, Leverkusen, Deutschland, die Herstellung ist unten beschrieben.

### Komponente D:

Fascat 4102 0,07 %, Urethanisierungskatalysator, Butylzinn-tris(2-ethylhexanoat), Produkt der Arkema GmbH, Düsseldorf, Deutschland.

### BYK^{®} 310:

silikonbasiertes Oberflächenadditiv der Firma BYK-Chemie GmbH, Wesel, 25%ige Lösung in Xylol

### Komponente E:

C. I. Basic Blue 3 (umgesalzt als Bis-(2-ethylhexyl)sulfosuccinat) 0,26 %, Safranin O (umgesalzt als Bis-(2-ethylhexyl)sulfosuccinat) 0,13 % und Astrazon Orange G (umgesalzt als Bis-(2-ethylhexyl)sulfosuccinat) 0,13% mit CGI 909, Versuchsprodukt der Fa. BASF SE, Basel, Schweiz, 1,5%, als Lösung in 5,8% Ethylacetat gelöst. Prozentgehalte beziehen sich auf die Gesamtformulierung des Mediums.

### Komponente F:

Ethylacetat (CAS-Nr. 141-78-6).

### Komponente G:

Desmodur^{®} N 3900, Handelsprodukt der Bayer MaterialScience AG, Leverkusen, Deutschland, Hexandiisocyanat-basiertes Polyisocyanat, Anteil an Iminooxadiazindion mindestens 30 %, NCO-Gehalt: 23,5 %.

### Trägersubstrat:

Makrofol^{®} DE 1-1 CC 125 µm, Polycarbonatfolie in 125 µm Schichtstärke, Handelsprodukt der Bayer MaterialScience AG, Leverkusen, Deutschland.

### Einsatzstoffe für die Harze:

Harz 1: Desmolux U 100 ist ein Handelsprodukt der Bayer MaterialScience AG, Leverkusen, ein hartes aber flexibles aliphatisches Urethanacrylat in 100% Lieferform mit einer typische Viskosität von 7500mPas/23°C (als Beispiel für Harz I, Gewichtsanteil Mw < 500 g/mol: 1,9%; Gewichtsanteil Mw > 1000 g/mol: 79,0 %). Harz 2: Tris[2-(acryloyloxy)ethyl]isocyanurat (CAS-Nr. 40220-08-4) wurde von der Sigma-Aldrich GmbH, Steinheim, Deutschland, erhalten (als Beispiel für Harz II).
Harz 3: Trimethylolpropantriacrylat (CAS-Nr. 15625-89-5) wurde von der ABCR GmbH & Co. KG, Karlsruhe, Deutschland, erhalten (als Beispiel für Harz II).
Harz 4: Di(trimethylolpropan)tetraacrylat (CAS-Nr. 94108-97-1) wurde von der Sigma-Aldrich GmbH, Steinheim, Deutschland, erhalten (als Beispiel für Harz II).
Harz 5: Pentaerythritoltriacrylat (CAS-Nr. 3524-68-3) wurde von der Sigma-Aldrich GmbH, Steinheim, Deutschland, erhalten (als Beispiel für Harz II).
Harz 6: Glycerolpropoxylat (1PO/OH) triacrylat (CAS-Nr. 52408-84-1) wurde von der Sigma-Aldrich GmbH, Steinheim, Deutschland, erhalten (als Beispiel für Harz II).
Harz 7: Isobornylmethacrylat (CAS-Nr. 7534-94-3) wurde unter dem Handelsnamen Ageflex IBOMA von der BASF SE, Basel, Schweiz, erhalten (als Beispiel für Harz IV).
Harz 8: Tetrahydrofurfurylacrylat (CAS-Nr. 2399-48-6) wurde unter dem Produktnamen Sartomer SR 285 von Arkema France, Colombes, Frankreich, erhalten (als Beispiel für Harz IV).
Harz 9: Dipentaerythrit-hexaacrylat (CAS-Nr. 29570-58-9) wurde unter dem Handelsnamen Agisyn 2830 von der Jobachem GmbH, Dassel, Deutschland, erhalten (als Beispiel für Harz II).
Harz 10: Hexandiol-diacrylat wurde unter dem Handelsnamen Laromer® HDDA von der BASF SE, Ludwigshafen, Deutschland, erhalten (als Beispiel für Harz IV).
Darocur 1173 ist ein Produkt der BASF SE, Basel, Schweiz (als Beispiel für Photoinitiatorsystem III).
Irgacure 2022 ist ein Produkt der BASF SE, Ludwigshafen, Deutschland (als Beispiel für Photoinitiatorsystem III).
BYK^{®} 310: silikonbasiertes Oberflächenadditiv der Firma BYK-Chemie GmbH, Wesel, 25%ige Lösung in Xylol.

### Messmethoden:

### Gelpermeationschromatografie zur Bestimmung der gewichtsmittleren Molekulargewichtsanteile (GPC)

Als Eluent diente unstabilisiertes Tetrahydrofuran bei einer Flussrate von 0,6 ml/min. Als stationäre Phase wurden vier hintereinander geschaltete Säulen der Fa. Macherey & Nagel, Typ: 2 x Nucleogel GPC 100-5 sowie 2 x Nucleogel GPC 50-5 verwendet. Als Trennmaterial dient quervernetztes Polystyrol-Divinylbenzol-Polymer mit 5 µm Partikelgröße sowie 50 bzw. 100 Ä Porenweite bei einer Säulenlänge von 30 cm sowie 7,7 mm Durchmesser. Jede Säule wies eine Länge von 30 cm und einen Durchmesser von 7,7 mm auf. Die Kalibrierung erfolgte mit einer Polystyrolkalibrierung im Bereich von 162 bis 8400 g/mol. Zur Auswertung wurde die Software PSS WINGPC Unity der Firma PolymerStandardServices verwendet.

### Messung der Trockenschichtdicke der Photopolymere

Die physikalische Schichtdicke wurde mit marktgängigen Weisslichtinterferometern ermittelt, wie z.B. das Gerät FTM-Lite NIR Schichtdickenmessgerät der Firma Ingenieursbüro Fuchs.

Die Bestimmung der Schichtdicke beruhte im Prinzip auf Interferenzerscheinungen an dünnen Schichten. Dabei überlagerten sich Lichtwellen, die an zwei Grenzflächen unterschiedlicher optischer Dichte reflektiert worden sind. Die ungestörte Überlagerung der reflektierten Teilstrahlen führte nun zur periodischen Aufhellung und Auslöschung im Spektrum eines weißen Kontinuumstrahlers (z.B. Halogenlampe). Diese Überlagerung nennt der Fachmann Interferenz. Die Interferenzspektren wurden gemessen und mathematisch ausgewertet.

### Festgehalt

Ca. 1g der Probe wurde in einem unlackierten Dosendeckel aufgetragen und mittels einer Büroklammer gut verteilt. Dosendeckel und Büroklammer wurden zuvor gewogen. Die Probe mit Büroklammer und Dosendeckel wurden eine Stunde bei 125°C in einem Ofen getrocknet. Der Festgehalt ergab sich: (Auswaage-Tara)*100 / (Einwaage-Tara).

### Viskosität

Die angegebenen Viskositäten wurden nach DIN EN ISO 3219/A.3 bei 23°C und einer Scherrate von 40s⁻¹ bestimmt.

### Isocyanatgehalt (NCO-Gehalt)

Die angegebenen NCO-Werte (Isocyanat-Gehalte) wurden gemäß DIN EN ISO 11909 bestimmt.

### Wassergehalt

Die angegebenen Wassergehalte (KF) aus Lösung wurden gemäß DIN 51777 bestimmt.

### Herstellungsvorschriften weiterer Einsatzstoffe für die holografischen Medien:

### Herstellung von Komponente A:

In einem 1 L Kolben wurden 0,18 g Zinnoktoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsartiger Feststoff erhalten.

### Herstellung von Komponente B1 (Phosphorthioyltris(oxy-4,1-phenyleniminocarbonyloxyethan-2,1-diyl)-triacrylat):

In einem 500 mL Rundkolben wurden 0,1 g 2,6-Di-tert.-butyl-4-methylphenol, 0,05 g Dibutylzinndilaurat (Desmorapid^{®} Z, Bayer MaterialScience AG, Leverkusen, Deutschland) sowie und 213.07 g einer 27 %-igen Lösung von Tris(p-isocyanatophenyl)thiophosphat in Ethylacetat (Desmodur^{®} RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0,1 % gesunken war. Danach wurde abgekühlt und im Vakuum das Ethylacetat vollständig entfernt. Das Produkt wurde als teilkristalliner Feststoff erhalten.

### Herstellung von Komponente B2 (2-({[3-(Methylsulfanyl)phenyl]carbamoyl}oxy)ethylprop-2-enoat):

In einem 100 mL Rundkolben wurden 0,02 g 2,6-Di-tert.-butyl-4-methylphenol, 0,01 g Desmorapid^{®} Z und 11.7 g 3-(Methylthio)phenylisocyanat vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0,1 % gesunken war. Danach wurde abgekühlt. Das Produkt wurde als hellgelbe Flüssigkeit erhalten.

### Herstellung des Additives C (Bis(2,2,3,3,4,4,5,5,6,6,7,7-dodecafluorheptyl)-(2,2,4-trimethylhexan-1,6-diyl)biscarbamat):

In einem 2000 mL Rundkolben wurden 0,02 g Desmorapid^{®} Z und 3,60 g 2,4,4-Trimethylhexane-1,6-diisocyanat (TMDI) vorgelegt und auf 70 °C erwärmt. Anschließend wurden 11,39 g 2,2,3,3,4,4,5,5,6,6,7,7-Dodecafluorheptan-1-ol zugetropft und die Mischung weiter auf 70 °C gehalten, bis der Isocyanatgehalt unter 0,1 % gesunken war. Danach wurde abgekühlt. Das Produkt wurde als farbloses Öl erhalten.

### Herstellung von holographischen Medien auf einer Folienbeschichtungsanlage

Im Folgenden wird die kontinuierliche Herstellung von holographischen Medien in der Form von Filmen aus erfindungsgemäßen und nicht erfindungsgemäßen Photopolymer-Formulierungen beschrieben.

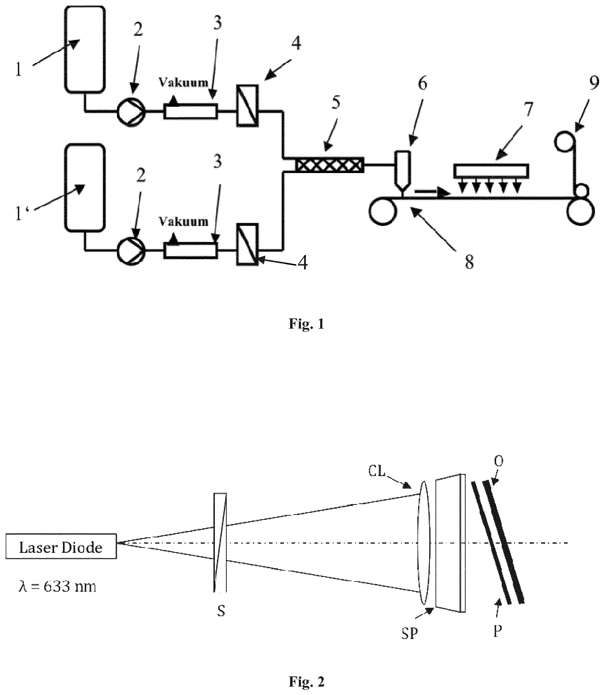

Zur Herstellung wurde die in Fig. 1 dargestellte Folienbeschichtungsanlage verwendet, wobei den einzelnen Bauteilen die folgenden Bezugszeichen zugeordnet sind:
- 1: Erster Vorratsbehälter
- 1': Zweiter Vorratsbehälter
- 2: Dosiereinrichtung
- 3: Vakuumentgasungseinrichtung
- 4: Filter
- 5: Statischer Mischer
- 6: Beschichtungseinrichtung
- 7: Umlufttrockner
- 8: Trägersubstrat
- 9: Abdeckschicht

Zur Herstellung der Photopolymer-Formulierung wurden in einem Rührbehälter 304,3g Komponente A schrittweise mit einer Schreibmonomermischung aus 138g Komponente B1 und 138g Komponente B2, mit 191g Additiv C, 0,60g Komponente D, 2,55g BYK^{®} 310 und 101g Komponente F versetzt und gemischt. Anschließend wurden 66,5g Komponente E der Mischung im Dunklen hinzugefügt und vermischt, so dass eine klare Lösung erhalten wurde. Wenn nötig, wurde die Formulierung für kurze Zeit bei 60 °C erwärmt, um die Einsatzstoffe schneller in Lösung zu bringen.

Dieses Gemisch wurde anschließend in den ersten Vorratsbehälter 1 der Beschichtungsanlage eingebracht. In den zweiten Vorratsbehälter 1' wurde die Komponente G (Polyisocyanat) eingefüllt. Beide Komponenten wurden dann jeweils durch die Dosiereinrichtungen 2 im Verhältnis von 942,2 (Komponenten A bis F) zu 57,8 (Komponente G) zur Vakuumentgasungseinrichtung 3 gefördert und entgast. Von hier aus wurden sie dann jeweils durch die Filter 4 in den statischen Mischer 5 geleitet, in dem die Vermischung der Komponenten zur Photopolymer-Formulierung erfolgte. Die erhaltene, flüssige Masse wurde dann im Dunklen der Beschichtungseinrichtung 6 zugeführt.

Bei der Beschichtungseinrichtung 6 handelte es sich im vorliegenden Fall um eine dem Fachmann bekannte Schlitzdüse. Alternativ kann aber auch ein Rakelsystem (Doctor Blade). zum Einsatz kommen. Mit Hilfe der Beschichtungseinrichtung 6 wurde die Photopolymer-Formulierung bei einer Verarbeitungstemperatur von 20 °C auf Makrofol DE 1-1 (125 µm) appliziert und für 5,8 Minuten bei einer Vernetzungstemperatur von 80°C in einem Umlufttrockner 7 getrocknet. Dabei wurde ein Medium in der Form eines Films erhalten, der dann mit einer 40 µm dicken Polyethylenfolie als Abdeckschicht 9 versehen und aufgewickelt wurde.

Die erzielte Schichtdicke des Films lag bei 18 µm ± 1 µm.

### Herstellung von Reflektionshologrammen im Photopolymer:

In das Photopolymer wurde ein Hologramm mittels einer Apparatur gemäß Fig. 2 einbelichtet. Dabei handelte es sich um monochromatische Hologramme mit 633 nm Laserwellenlänge. Dazu wurden Stücke des Films im Dunkeln abgeschnitten, die Kaschierfolie entfernt und die Filme mit der Photopolymerseite nach unten auf ein Glas der Größe 50 x 75 mm und Dicke 1 mm blasenfrei laminiert. Als Gläser wurden Corning Gläser der Firma Schott AG, Mainz, Deutschland verwendet.

Der Strahl eines Lasers (Emissionswellenlänge 633 nm) wurde mit Hilfe einer optionalen Aufweitungslinse AF und einer Kollimationslinse CL, die hinter einem Shutter S platziert ist, auf einen Durchmesser von etwa 3 - 4 cm aufgeweitet. Der Durchmesser des aufgeweiteten Laserstrahls wird dabei durch die Apertur des geöffneten Shutters S bestimmt. Es wird bewusst auf eine inhomogene Intensitätsverteilung des aufgeweiteten Laserstrahles geachtet. So beträgt die Randintensität *P_{R}* ∼ nur die Hälfte der Intensität *P_{Z}* im Zentrum des aufgeweiteten Laserstrahls. P ist hier als Leistung/ Fläche zu verstehen.

Der aufgeweitete Laserstrahl durchläuft zunächst eine schräg zum Strahl gestellte Glasplatte SP, die als Shearing Plate dient. Anhand des nach oben gespiegelten Interferenzmusters, das von den zwei Glasoberflächenreflexen der Shearing Plate SP erzeugt wird, kann erkannt werden, ob der Laser stabil im Single Mode emittiert. In diesem Falle sind auf einer über der Shearing Plate SP platzierten Mattscheibe dunkle und helle Streifen zu sehen. Nur wenn Single Mode Emission gegeben ist werden holographischen Belichtungen durchgeführt. Im Falle der DPSS Laser kann der Single Mode durch einstellen des Pumpstroms erreicht werden.

Der aufgeweitete Strahl durchläuft ein etwa 15° schräg gestelltes holographisches Medium P. Dieser Teil bildet den Referenzstrahl, um dann vom zum holographischen Medium P parallel angeordneten Objekt O wieder zurück in das holographische Medium P reflektiert zu werden. Dieser Teil bildet dann den Signalstrahl der Denisyukanordnung. Das Objekt O besteht aus einer mit weißem Papier bedeckten Metallplatte, wobei die Papierseite dem holographischen Medium P zugewandt ist. Auf dem Papier befindet sich ein quadratisches Raster in Form schwarzer Linien. Die Kantenlänge eines Quadrates beträgt 0,5 cm. Dieses Raster wird bei der holographischen Belichtung des holographischen Mediums P mit im Hologramm abgebildet. Die Interferenz von Signal- und Referenzstrahl in dem holographischen Medium P erzeugt das Hologramm in dem holographischen Medium P.

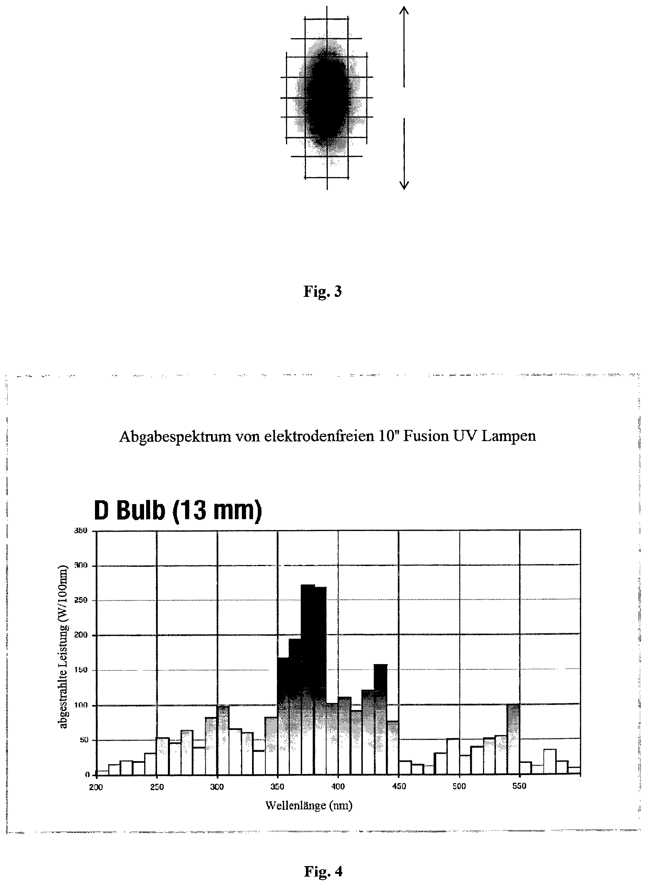

Die mittlere Belichtungsdosis *Eₐᵥₑ* wird durch die Öffnungszeit *t* des Shutters S eingestellt. Bei fixierter Laserleistung *I* stellt *t* daher eine zu *Eₐᵥₑ* proportionale Größe dar. Da der aufgeweitete Laserstrahl eine inhomogenene (glockenförmige) Intensitätsverteilung besitzt, variiert die lokale Dosis *E* zur Erzeugung des Hologramms in dem holographischen Medium P. Dies führt, zusammen mit der Schrägstellung des holographischen Mediums P und des Objekts O zur optischen Achse dazu, dass das geschriebene Hologramm eine elliptische Form besitzt. Dies ist in Fig. 3 dargestellt.

Da es sich bei dem Objekt O um einen diffusen Reflektor handelt ist das Hologramm durch Beleuchten mit einer Punktlichtquelle (z. B. Taschenlampe oder LED-Leuchte) leicht zu rekonstruieren.

Im nächsten Herstellungsschritt werden die Proben mit der Glasseite zur Lampe hin auf das Förderband eines UV-Strahlers gelegt und mit einer Bahngeschwindigkeit von 2,5 m/min zwei Mal belichtet. Als UV-Strahler wird eine eisendotierte Hg-Lampe vom Typ Fusion UV type "D Bulb" No. 558434 KR 85 mit 80 W / cm² Gesamtleistungsdichte verwendet. Das Spektrum der verwendeten Lampe ist in Fig. 4 abgebildet (Herstellerangabe). Die Parameter entsprechen einer Dosis von 2 x 2,0 J/cm², gemessen mit einem Light Bug des Typs ILT 490. Mit "Dosis" ist generell jeweils die tatsächlich auf den Photopolymerfilm einwirkende Lichtmenge gemeint.

### Herstellung der Schichtaufbauten

Alle Komponenten der Schutzschicht wurden in einem Speedmixer für eine Minute innig vermischt. Dabei wurde das Verlaufsadditiv zuletzt hinzugefügt. Die Mischungen waren nach dem Mischen leicht trüb. Anschließend wurde diese mit einem Spiralrakel 12µm dick direkt auf die belichtete Photopolymerschicht mit dem Testhologramm aufgerakelt. Zum direkten Vergleich wurde dabei nur die Hälfte des Testhologramms abgedeckt. Anschließend wurde die strahlungshärtende Schicht bei 2,5 m/min auf ein Transportband unter einer UV-Lampe (Typ Fusion UV 558434 KR 85, 80 W/cm²) vorbeigefahren und auf diese Weise gehärtet. Der Schichtaufbau war dann trocken.

Die Zusammensetzung der erfindungsgemäßen Schutzschichten ist in den folgenden Beispielen angegeben:
Beispiel 1: 85,7 g Harz 1, 9,5 g Harz 2, 2,9 g Darocur® 1173, 1,9 g BYK® 310.
Beispiel 2: 66,7 g Harz 1, 28,6 g Harz 2, 2,9 g Darocur® 1173, 1,9 g BYK® 310.
Beispiel 3: 85,7 g Harz 1, 9,5 g Harz 3, 2,9 g Darocur® 1173, 1,9 g BYK® 310.
Beispiel 4: 85,7 g Harz 1, 9,5 g Harz 4, 2,9 g Darocur® 1173, 1,9 g BYK® 310.
Beispiel 5: 85,7 g Harz 1, 9,5 g Harz 5, 2,9 g Darocur® 1173, 1,9 g BYK® 310.
Beispiel 6: 85,7 g Harz 1, 9,5 g Harz 6, 2,9 g Darocur® 1173, 1,9 g BYK® 310.
Beispiel 7: 81,4 g Harz 1, 9,0 g Harz 2, 4,8 g Harz 8, 2,9 g Darocur® 1173, 1,9 g BYK® 310.
Beispiel 8: 77,1 g Harz 1, 8,6 g Harz 2, 9,5 g Harz 7, 2,9 g Darocur® 1173, 1,9 g BYK® 310.
Beispiel 9: 63,3 g Harz 1, 27,1 g Harz 2, 4,8 g Harz 8, 2,9 g Darocur® 1173, 1,9 g BYK® 310.
Beispiel 10: 60,0 g Harz 1, 25,7 g Harz 2, 9,5 g Harz 8, 2,9 g Darocur® 1173, 1,9 g BYK® 310.
Beispiel 11: 60,0 g Harz 1, 25,7 g Harz 2, 9,5 g Harz 7, 2,9 g Darocur® 1173, 1,9 g BYK® 310.

### Transfermethode für den Lack:

Eine in der Laborspülmaschine vorgereinigte, glatte Floatglas-Glasplatte wird mit Aceton entfettet, getrocknet und auf einem Klemmbrett fixiert. Die Glasoberfläche wird mit der gewünschten Lackformulierung unter Verwendung eines 12µm starkem Spiralrakel beschichtet. Anschließend wird ein Stück Photopolymer, das mindestens genauso groß ist wie die beschichtete Fläche, auf dem Glas unter Zuhilfenahme einer Handrolle auf die noch nasse Oberfläche des Lacks aufgerollt bzw. laminiert. Dabei ist die Photopolymerschicht dem Lack zugewandt und die Substratfolie der Handrolle. Der Schichtaufbau wird dann mit etwas Klebeband an einer Seite auf dem Glas fixiert, um ein Verrutschen der Folie gegen das Glas zu verhindern, und mit dieser Seite voraus bei Raumtemperatur durch den GSH 380 Rollenlaminator geschoben. Dann werden die Proben mit der Glasseite zur Lampe hin auf das Förderband eines UV-Strahlers gelegt und mit einer Bahngeschwindigkeit von 2,5 m/min zwei Mal belichtet. Als UV-Strahler wird die vorgenannte eisendotierte Hg-Lampe vom Typ Fusion UV type "D Bulb" No. 558434 KR 85 mit 80 W / cm² Gesamtleistungsdichte verwendet. Die Parameter entsprechen einer Dosis von 2 x 2,0 J/cm² (gemessen mit einem Light Bug des Typs ILT 490). Der Schichtaufbau war dann trocken. Die lackierte Probe kann dann problemlos vom Glas entfernt werden.

### Verwendung der Lackformulierungen als Klebstoff:

Alle Komponenten der Schutzschicht wurden in einem Speedmixer für eine Minute innig vermischt. Dabei wurde kein Verlaufsadditiv hinzugefügt. Die Mischungen waren nach dem Mischen leicht trüb. Anschließend wurde diese mit einem Spiralrakel 12µm dick direkt auf die belichtete Photopolymerschicht mit dem Testhologramm gerakelt. Zum direkten Vergleich wurde dabei nur die Hälfte des Testhologramms abgedeckt. Anstelle der direkten Aushärtung nach Auftragung des Lackes wird unter Zuhilfenahme einer Handrolle auf die noch nasse Oberfläche des Lacks eine schwarze Polycarbonatfolie vom Typ Makrofol DE 1-4 (Handelsprodukt der Bayer MaterialScience AG, Leverkusen, Deutschland) laminiert. Danach wird die Proben mit der transparenten Seite zur Lampe hin auf das Förderband eines UV-Strahlers gelegt und mit einer Bahngeschwindigkeit von 2,5 m/min zwei Mal belichtet. Als UV-Strahler wird die vorgenannte eisendotierte Hg-Lampe vom Typ Fusion UV type "D Bulb" No. 558434 KR 85 mit 80 W / cm² Gesamtleistungsdichte verwendet. Die Parameter entsprechen einer Dosis von 2 x 2,0 J/cm² (gemessen mit einem Light Bug des Typs ILT 490). Der Schichtaufbau war dann verklebt.

Die Zusammensetzung der erfindungsgemäßen Klebstoffformulierungen ist in den folgenden Beispielen angegeben:
Beispiel 12: 85,7 g Harz 1, 9,5 g Harz 2, 5,0 g Irgacure® 2022.
Beispiel 13: 66,7 g Harz 1, 28,6 g Harz 2, 5,0 g Irgacure® 2022.
Beispiel 14: 85,7 g Harz 1, 9,5 g Harz 3, 5,0 g Irgacure® 2022.
Beispiel 15: 85,7 g Harz 1, 9,5 g Harz 4, 5,0 g Irgacure® 2022.
Beispiel 16: 85,7 g Harz 1, 9,5 g Harz 5, 5,0 g Irgacure® 2022.
Beispiel 17: 85,7 g Harz 1, 9,5 g Harz 6, 5,0 g Irgacure® 2022.
Beispiel 18: 85,7 g Harz 1, 9,5 g Harz 6, 5,0 g Irgacure® 2022.
Beispiel 19: 81,4 g Harz 1, 9,0 g Harz 2, 4,8 g Harz 8, 5,0 g Irgacure® 2022.
Beispiel 20: 77,1 g Harz 1, 8,6 g Harz 2, 9,5 g Harz 7, 5,0 g Irgacure® 2022.
Beispiel 21: 81,4 g Harz 1, 9,0 g Harz 2, 4,8 g Harz 10, 5,0 g Irgacure® 2022.
Beispiel 22: 63,3 g Harz 1, 27,1 g Harz 2, 4,8 g Harz 8, 5,0 g Irgacure® 2022.
Beispiel 23: 60,0 g Harz 1, 25,7 g Harz 2, 9,5 g Harz 8, 5,0 g Irgacure® 2022.
Beispiel 24: 60,0 g Harz 1, 25,7 g Harz 2, 9,5 g Harz 7, 5,0 g Irgacure® 2022.

### Überprüfen des Farbshiftes in den Hologrammen:

Zur Beurteilung eines möglichen Farbshifts der Lacke wurden die wie oben beschrieben hergestellten Proben mit einem Haftklebeband der 3M Deutschland GmbH, Neuss, Deutschland (Produktnummer 8212) gegen die glänzende Seite (1er-Seite) einer schwarze Polycarbonatfolie vom Typ Makrofol DE 1-4 (Handelsprodukt der Bayer MaterialScience AG, Leverkusen, Deutschland) verklebt und 7 Tage bei RT gelagert.

Die Schichtaufbauten in welchen die erfindungsgemäße Harzformulierungen direkt als Klebstoff verwendet wurden, wurden lediglich vor der Ausprüfung 7 Tage bei RT gelagert.

Nach Lagerung von 7 Tagen bei Raumtemperatur nach der Aushärtung der Lackschicht bzw. der Verklebung mit dem Haftklebeband wurde die Farbveränderung im Hologramm mit bloßem Auge unter geeigneter Beleuchtung durch monochromatische LED (rot, grün, blau), Weißlicht-LED und Halogenlampe beurteilt. In allen genannten Beispielen traten keine mit bloßem Auge sichtbaren Farbveränderungen auf. Bei direkter Applikation des Haftklebebands ist eine deutliche Farbverschiebung von rot zu grün zu erkennen. Damit wurde durch die Applikation der Schutzschicht die gestellte Aufgabe gelöst.

## Patentansprüche

1. Schichtaufbau mit einer Schutzschicht und einer belichteten Photopolymerschicht, wobei die Schutzschicht durch Umsetzung einer Mischung enthaltend oder bestehend aus wenigstens einem strahlungshärtenden Harz I), einem multifunktionellen strahlungshärtenden Harz II) und einem Photoinitiatorsystem III) erhältlich ist und in dem strahlungshärtenden Harz I) ≤ 5 Gew.-% Verbindungen mit einem gewichtsmittleren Molekulargewicht < 500 und ≥ 75 Ges.-% Verbindungen mit einem gewichtsmittleren Molekulargewicht > 1000 enthalten sind, das multifunktionelle strahlungshärtende Harz II) mindestens ein Acrylat mit wenigstens zwei strahlungshärtende Gruppen umfasst oder daraus besteht und in der Mischung mindestens 55 Gew.-% des strahlungshärtenden Harzes I) und maximal 35 Ges.-% des multifunktionellen strahlungshärtenden Harzes II) enthalten sind, wobei zur Bestimmung der gewichtsmittleren Molekulargewichtsanteile die Gelpermeationschromatografie Methode wie in der Beschreibung detailliert, eingesetzt wird.

2. Schichtaufbau nach Anspruch 1, **dadurch gekennzeichnet, dass** die Photopolymerschicht vernetzte Matrixpolymere A), erhältlich durch Umsetzung wenigstens einer Polyisocyanat-Komponente a) und einer Isocyanat reaktiven-Komponente b), vernetzte Schreibmonomere B), einen Photoinitiator C) und gegebenenfalls einen Katalysator D) enthält.

3. Schichtaufbau nach Anspruch 1 oder 2, **dadurch gekennzeichnet, dass** das strahlungshärtende Harz I) wenigstens ein polyester-, polyether-, polycarbonat -und / oder polyurethanhaltiges Bindemittel mit radikalisch polymerisierbaren Gruppen umfasst, wobei es sich bei den radikalisch polymerisierbaren Gruppen bevorzugt um Acryl-, Methacryl-, Allyl-, Vinyl-, Maleinyl- und / oder Fumarylgruppen, besonders bevorzugt um Acryl- und / oder Methacrylgruppen und ganz besonders bevorzugt um Acrylgruppen handelt.

4. Schichtaufbau nach einem der vorstehenden Ansprüche, **dadurch gekennzeichnet, dass** das strahlungshärtende Harz I) wenigstens eine Verbindung aus der Gruppe der Polyetheracrylate, Polyesteracrylate, aliphatischen Urethanacrylate, aromatischen Urethanacrylate und Epoxyacrylate enthält, bevorzugt wenigstens ein aliphatisches Urethanacrylat und / oder wenigstens ein aromatisches Urethanacrylat.

5. Schichtaufbau nach einem der vorstehenden Ansprüche, **dadurch gekennzeichnet, dass** in dem strahlungshärtenden Harz I) ≤ 4 Gew.-% Verbindungen mit einem gewichtsmittleren Molekulargewicht < 500 und ≥ 77 Gew.-% Verbindungen mit einem gewichtsmittleren Molekulargewicht > 1000 enthalten sind, bevorzugt ≤ 3,5 Gew.-% Verbindungen mit einem gewichtsmittleren Molekulargewicht < 500 und ≥ 79 Gew.-% Verbindungen mit einem gewichtsmittleren Molekulargewicht > 1000.

6. Schichtaufbau nach einem der vorstehenden Ansprüche, **dadurch gekennzeichnet, dass** es sich bei den strahlungshärtenden Gruppen des multifunktionellen strahlungshärtenden Harzes II) um radikalisch polymerisierbare Gruppen handelt, die insbesondere ausgewählt sind aus Acryl-, Methacryl-, Allyl-, Vinyl-, Maleinyl- und / oder Fumarylgruppen, bevorzugt um Acryl- und / oder Methacrylgruppen und besonders bevorzugt um Acrylgruppen.

7. Schichtaufbau nach einem der vorstehenden Ansprüche, **dadurch gekennzeichnet, dass** das multifunktionelle strahlungshärtende Harz II) ausschließlich aus Verbindungen mit wenigstens zwei strahlungshärtenden Gruppen besteht, insbesondere aus Verbindungen mit wenigstens drei und/ oder wenigstens vier strahlungshärtenden Gruppen, vorzugsweise aus Verbindungen mit genau drei und/ oder genau vier strahlungshärtenden Gruppen.

8. Schichtaufbau nach einem der vorstehenden Ansprüche, **dadurch gekennzeichnet, dass** die Mischung zur Erzeugung der Schutzschicht 3 Gew.-% bis 30 Gew.-% des multifunktionellen strahlungshärtenden Harzes II) enthält, insbesondere 5 Gew.-% bis 15 Gew.-%.

9. Schichtaufbau nach einem der vorstehenden Ansprüche, **dadurch gekennzeichnet, dass** die Mischung ≤ 10 Gew.-% eines strahlungshärtenden Harzes IV) enthält, insbesondere 0,01 bis 10 Gew.-%, vorzugsweise 3 bis 10 Gew.-%, wobei das strahlungshärtende Harz IV) ausgewählt ist aus einer oder mehreren strahlungshärtenden Verbindungen mit radikalisch polymerisierbaren Gruppen, wobei es sich bei den radikalisch polymerisierbaren Gruppen insbesondere um Acryl-, Methacryl-, Allyl-, Vinyl-, Maleinyl- und / oder Fumarylgruppen handelt, bevorzugt um Acryl- und / oder Methacrylgruppen.

10. Schichtaufbau nach Anspruch 9, **dadurch gekennzeichnet, dass** die in dem strahlungshärtenden Harz IV) eingesetzten Verbindungen ein gewichtsmittleres Molekulargewicht von ≤ 800 g/mol aufweisen, insbesondere 72 bis 800 g/mol, vorzugsweise von 72 g/mol bis 500 g/mol, bevorzugt von 85 g/mol bis 300 g/mol.

11. Verfahren zur Erzeugung eines Schichtaufbaus nach einem der Ansprüche 1 bis 10, **dadurch gekennzeichnet, dass** auf eine belichtete Photopolymerschicht eine Mischung umfassend oder bestehend aus dem strahlungshärtenden Harz I), dem multifunktionellen strahlungshärtenden Harz II) und dem Photoinitiatorsystem III) aufgebracht und ausgehärtet wird, wobei in dem strahlungshärtenden Harz I) ≤ 5 Gew.-% Verbindungen mit einem gewichtsmittleren Molekulargewicht < 500 und ≥ 75 Ges.-% Verbindungen mit einem gewichtsmittleren Molekulargewicht > 1000 enthalten sind, das multifunktionelle strahlungshärtende Harz II) mindestens ein Acrylat mit wenigstens zwei strahlungshärtende Gruppen umfasst oder daraus besteht und in der Mischung mindestens 55 Gew.-% des strahlungshärtenden Harzes I) und maximal 35 Gew.-% des multifunktionellen strahlungshärtenden Harzes II) enthalten sind, wobei zur Bestimmung der gewichtsmittleren Molekulargewichtsanteile die Gelpermeationschromatografie Methode wie in der Beschreibung detailliert, eingesetzt wird.

12. Verfahren nach Anspruch 11, **dadurch gekennzeichnet, dass** die Mischung vor dem Aushärten mit einer Abdeckschicht abgedeckt und anschließend ausgehärtet wird, wobei die Aushärtung insbesondere mittels Strahlungshärtung durch die Photopolymerschicht und/ oder die Abdeckschicht erfolgt.

13. Verfahren nach Anspruch 11, **dadurch gekennzeichnet, dass** die Mischung auf eine Transferoberfläche, bevorzugt eine optisch transparente Transferoberfläche, insbesondere bevorzugt auf eine Glasoberfläche aufgetragen wird, die Photopolymerschicht auf die noch nicht ausgehärtete Mischung aufgebracht und angepresst wird, wobei die Aushärtung unter Ausbildung der Schutzschicht insbesondere mittels Strahlungshärtung durch die Photopolymerschicht und/ oder die Transferoberfläche erfolgt, vorzugsweise durch die Transferoberfläche, und anschließend ein Laminat aus der Schutzschicht und der Photopolymerschicht von der Transferoberfläche abgezogen wird.

14. Verfahren nach einem der Ansprüche 11 bis 13, **dadurch gekennzeichnet, dass** die Schutzschicht in einem Walzenverfahren appliziert und anschließend ausgehärtet wird, wobei insbesondere eine glatte oder strukturierte Oberfläche in der Schutzschicht erzeugt wird, und wobei die strukturierte Oberfläche bevorzugt als Antireflexschicht, als Oberflächenstreuer, als Diffusor, als Prisma oder Doppelprisma oder als Lentikularstruktur fungiert.

15. Verwendung des Schichtaufbaus nach einem der Ansprüche 1 bis 10 in einem Etikett, in einer Sicherheitskarte, in einer Banknote, in einem Druckartikel, in einem optischen Aufbau, in einem elektronischen Display oder einem anderen Gegenstand mit mehrschichtigem Aufbau und einer holographisch optischen Schicht, bevorzugt umfassend mindestens ein Hologramm, das in der Photopolymerschicht einbelichtet wurde.

## Claims

1. Layered construction with a protective layer and a photoexposed photopolymer layer, the protective layer being obtainable by reaction of a mixture comprising or consisting of at least one radiation-curing resin I), a polyfunctional radiation-curing resin II) and a photoinitiator system III), the radiation-curing resin I) comprising ≤ 5 wit.% of compounds having a weight-average molecular weight < 500 and ≥ 75 wt.% of compounds having a weight-average molecular weight > 1000, the polyfunctional radiation-curing resin II) comprising or consisting of at least one acrylate having at least two radiation-curing groups, and the mixture comprising at least 55 wt.% of the radiation-curing resin I) and not more than 35 wt.% of the polyfunctional radiation-curing resin II), using the gel permeation chromatography method as detailed in the description to determine the weight-average molecular weight fractions.

2. Layered construction according to Claim 1, **characterized in that** the photopolymer layer comprises crosslinked matrix polymers A) obtainable by reaction of at least one polyisocyanate component a) and an isocyanate-reactive component b), crosslinked writing monomers B), a photoinitiator C) and optionally a catalyst D).

3. Layered construction according to Claim 1 or 2, **characterized in that** the radiation-curing resin I) comprising at least one polyester-, polyether-, polycarbonate and/or polyurethane-containing binder having radically polymerizable groups, the radically polymerizable groups being preferably acryloyl, methacryloyl, allyl, vinyl, maleyl and/or fumaryl groups, more preferably acryloyl and/or methacryloyl groups and very preferably acryloyl groups.

4. Layered construction according to any of the preceding claims, **characterized in that** the radiation-curing resin I) comprises at least one compound from the group of polyether acrylates, polyester acrylates, aliphatic urethane acrylates, aromatic urethane acrylates and epoxy acrylates, preferably at least one aliphatic urethane acrylate and/or at least one aromatic urethane acrylate.

5. Layered construction according to any of the preceding claims, **characterized in that** in the radiation-curing resin I) there are ≤ 4 wt.% of compounds having a weight-average molecular weight < 500 and ≥ 77 wt.% of compounds having a weight-average molecular weight > 1000, preferably ≤ 3.5 wt.% of compounds having a weight-average molecular weight < 500 and ≥ 79 wt.% of compounds having a weight-average molecular weight > 1000.

6. Layered construction according to any of the preceding claims, **characterized in that** the radiation-curing groups of the polyfunctional radiation-curing resin II) are radically polymerizable groups, which are selected more particularly from acryloyl, methacryloyl, allyl, vinyl, maleyl and/or fumaryl groups, preferably acryloyl and/or methacryloyl groups and more preferably acryloyl groups.

7. Layered construction according to any of the preceding claims, **characterized in that** the polyfunctional radiation-curing resin II) consists exclusively of compounds having at least two radiation-curing groups, more particularly of compounds having at least three and/or at least four radiation-curing groups, preferably of compounds having precisely three and/or precisely four radiation-curing groups.

8. Layered construction according to any of the preceding claims, **characterized in that** the mixture for producing the protective layer comprises 3 wt.% to 30 wt.% of the polyfunctional radiation-curing resin II), more particularly 5 wt.% to 15 wt.%.

9. Layered construction according to any of the preceding claims, **characterized in that** the mixture comprises ≤ 10 wt.% of a radiation-curing resin IV), more particularly 0.01 to 10 wt.%, preferably 3 to 10 wt.%, the radiation-curing resin IV) being selected from one or more radiation-curing compounds having radically polymerizable groups, the radically polymerizable groups being more particularly acryloyl, methacryloyl, allyl, vinyl, maleyl and/or fumaryl groups, preferably acryloyl and/or methacryloyl groups.

10. Layered construction according to Claim 9, **characterized in that** the compounds used in the radiation-curing resin IV) have a weight-average molecular weight of < 800 g/mol, more particularly 72 to 800 g/mol, preferably of 72 g/mol to 500 g/mol, more preferably of 85 g/mol to 300 g/mol.

11. Method for producing a layered construction according to any of Claims 1 to 10, **characterized in that** a mixture comprising or consisting of the radiation-curing resin I), the polyfunctional radiation-curing resin II) and the photoinitiator system III) is applied to a photoexposed photopolymer layer and cured, where in the radiation-curing resin I) there are ≤ 5 wt.% of compounds having a weight-average molecular weight < 500 and ≥ 75 wt.% of compounds having a weight-average molecular weight > 1000, the polyfunctional radiation-curing resin II) comprising or consisting of at least one acrylate having at least two radiation-curing groups, and in the mixture there are at least 55 wt.% of the radiation-curing resin I) and not more than 35 wt.% of the polyfunctional radiation-curing resin II), using the gel permeation chromatography method as detailed in the description to determine the weight-average molecular weight fractions.

12. Method according to Claim 11, **characterized in that** prior to the curing, the mixture is covered with a cover layer and is subsequently cured, the curing taking place more particularly by means of radiation curing through the photopolymer layer and/or the cover layer.

13. Method according to Claim 11, **characterized in that** the mixture is applied to a transfer surface, preferably an optically transparent transfer surface, very preferably to a glass surface, and the photopolymer layer is applied to the as yet uncured mixture and pressed on, curing to form the protective layer taking place more particularly by means of radiation curing through the photopolymer layer and/or the transfer surface, preferably through the transfer surface, and subsequently a laminate composed of the protective layer and the photopolymer layer is removed from the transfer surface.

14. Method according to any of Claims 11 to 13, **characterized in that** the protective layer is applied in a roll process and is subsequently cured, a smooth or structured surface being produced in the protective layer, more particularly, the structured surface operating preferably as an antireflection layer, as surface scatterer, as diffuser, as prism or double-prism or as lenticular structure.

15. Use of the layered construction according to any of Claims 1 to 10 in a label, in a security card, in a banknote, in a printed article, in an optical construction, in an electronic display or in another article having multi-layer construction and a holographically optical layer, preferably comprising at least one hologram which has been photoexposed in the photopolymer layer.

## Revendications

1. Structure en couches comprenant une couche de protection et une couche de photopolymère exposée, la couche de protection pouvant être obtenue par mise en réaction d'un mélange contenant ou constitué par au moins une résine durcissant par rayonnement I), une résine multifonctionnelle durcissant par rayonnement II) et un système de photoinitiateur III), et la résine durcissant par rayonnement I) contenant ≤ 5 % en poids de composés ayant un poids moléculaire moyen en poids < 500 et ≥ 75 % en poids de composés ayant un poids moléculaire moyen en poids > 1 000, la résine multifonctionnelle durcissant par rayonnement II) comprenant au moins un acrylate contenant au moins deux groupes durcissant par rayonnement ou en étant constituée, et le mélange contenant au moins 55 % en poids de la résine durcissant par rayonnement I) et au plus 35 % en poids de la résine multifonctionnelle durcissant par rayonnement II), la méthode de chromatographie par perméation de gel telle que détaillée dans la description étant utilisée pour la détermination des proportions de poids moléculaire moyen en poids.

2. Structure en couches selon la revendication 1, **caractérisée en ce que** la couche de photopolymère contient des polymères de matrice réticulés A), pouvant être obtenus par mise en réaction d'au moins un composant polyisocyanate a) et d'un composant réactif avec les isocyanates b), de monomères d'écriture réticulés B), d'un photoinitiateur C) et éventuellement d'un catalyseur D).

3. Structure en couches selon la revendication 1 ou 2, **caractérisée en ce que** la résine durcissant par rayonnement I) comprend au moins un liant contenant un polyester, polyéther, polycarbonate et/ou polyuréthane à groupes polymérisables par voie radicalaire, les groupes polymérisables par voie radicalaire étant de préférence des groupes acryliques, méthacryliques, allyliques, vinyliques, maléinyliques et/ou fumaryliques, de manière particulièrement préférée des groupes acryliques et/ou méthacryliques et de manière tout particulièrement préférée des groupes acryliques.

4. Structure en couches selon l'une quelconque des revendications précédentes, **caractérisée en ce que** la résine durcissant par rayonnement I) contient au moins un composé du groupe des polyéther-acrylates, des polyester-acrylates, des acrylates d'uréthane aliphatiques, des acrylates d'uréthane aromatiques et des époxyacrylates, de préférence au moins un acrylate d'uréthane aliphatique et/ou au moins un acrylate d'uréthane aromatique.

5. Structure en couches selon l'une quelconque des revendications précédentes, **caractérisée en ce que** la résine durcissant par rayonnement I) contient ≤ 4 % en poids de composés ayant un poids moléculaire moyen en poids < 500 et ≥ 77 % en poids de composés ayant un poids moléculaire moyen en poids > 1 000, de préférence ≤ 3,5 % en poids de composés ayant un poids moléculaire moyen en poids < 500 et ≥ 79 % en poids de composés ayant un poids moléculaire moyen en poids > 1 000.

6. Structure en couches selon l'une quelconque des revendications précédentes, **caractérisée en ce que** les groupes durcissant par rayonnement de la résine multifonctionnelle durcissant par rayonnement II) sont des groupes polymérisables par voie radicalaire, qui sont notamment choisis parmi les groupes acryliques, méthacryliques, allyliques, vinyliques, maléinyliques et/ou fumaryliques, de préférence des groupes acryliques et/ou méthacryliques, et de manière particulièrement préférée des groupes acryliques.

7. Structure en couches selon l'une quelconque des revendications précédentes, **caractérisée en ce que** la résine multifonctionnelle durcissant par rayonnement II) est exclusivement constituée de composés contenant au moins deux groupes durcissant par rayonnement, notamment de composés contenant au moins trois et/ou au moins quatre groupes durcissant par rayonnement, de préférence de composés contenant exactement trois et/ou exactement quatre groupes durcissant par rayonnement.

8. Structure en couches selon l'une quelconque des revendications précédentes, **caractérisée en ce que** le mélange pour la formation de la couche de protection contient 3 % en poids à 30 % en poids de la résine multifonctionnelle durcissant par rayonnement II), notamment 5 % en poids à 15 % en poids.

9. Structure en couches selon l'une quelconque des revendications précédentes, **caractérisée en ce que** le mélange contient ≤ 10 % en poids d'une résine durcissant par rayonnement IV), notamment 0,01 à 10 % en poids, de préférence 3 à 10 % en poids, la résine durcissant par rayonnement IV) étant choisie parmi un ou plusieurs composés durcissant par rayonnement contenant des groupes polymérisables par voie radicalaire, les groupes polymérisables par voie radicalaire étant notamment des groupes acryliques, méthacryliques, allyliques, vinyliques, maléinyliques et/ou fumaryliques, de préférence des groupes acryliques et/ou méthacryliques.

10. Structure en couches selon la revendication 9, **caractérisée en ce que** les composés utilisés dans la résine durcissant par rayonnement IV) présentent un poids moléculaire moyen en poids ≤ 800 g/mol, notamment de 72 à 800 g/mol, de préférence de 72 g/mol à 500 g/mol, de préférence de 85 g/mol à 300 g/mol.

11. Procédé de formation d'une structure en couches selon l'une quelconque des revendications 1 à 10, **caractérisé en ce qu'**un mélange comprenant ou constitué par la résine durcissant par rayonnement I), la résine multifonctionnelle durcissant par rayonnement II) et le système de photoinitiateur III) est appliqué sur une couche de photopolymère exposée et durcie, la couche durcissant par rayonnement I) contenant ≤ 5 % en poids de composés ayant un poids moléculaire moyen en poids < 500 et ≥ 75 % en poids de composés ayant un poids moléculaire moyen en poids > 1 000, la résine multifonctionnelle durcissant par rayonnement II) comprenant au moins un acrylate contenant au moins deux groupes durcissant par rayonnement ou en étant constituée, et le mélange contenant au moins 55 % en poids de la résine durcissant par rayonnement I) et au plus 35 % en poids de la résine multifonctionnelle durcissant par rayonnement II), la méthode de chromatographie par perméation de gel telle que détaillée dans la description étant utilisée pour la détermination des proportions de poids moléculaire moyen en poids.

12. Procédé selon la revendication 11, **caractérisé en ce que** le mélange est recouvert avec une couche de recouvrement avant le durcissement, puis durci, le durcissement ayant notamment lieu au moyen d'un durcissement par rayonnement au travers de la couche de photopolymère et/ou de la couche de recouvrement.

13. Procédé selon la revendication 11, **caractérisé en ce que** le mélange est appliqué sur une surface de transfert, de préférence une surface de transfert optiquement transparente, de manière particulièrement préférée sur une surface en verre, la couche de photopolymère est appliquée sur le mélange encore non durci et comprimée, le durcissement ayant lieu avec formation de la couche de protection notamment au moyen d'un durcissement par rayonnement au travers de la couche de photopolymère et/ou de la surface de transfert, de préférence au travers de la surface de transfert, puis un stratifié de la couche de protection et de la couche de photopolymère étant retiré de la surface de transfert.

14. Procédé selon l'une quelconque des revendications 11 à 13, **caractérisé en ce que** la couche de protection est appliquée par un procédé de cylindrage, puis durcie, une surface lisse ou structurée étant notamment formée dans la couche de protection, et la surface structurée fonctionnant de préférence en tant que couche antireflet, en tant que diffuseur de surface, en tant que diffuseur, en tant que prisme ou prisme double, ou en tant que structure lenticulaire.

15. Utilisation de la structure en couches selon l'une quelconque des revendications 1 à 10 dans une étiquette, dans une carte de sécurité, dans un billet de banque, dans un article imprimé, dans une structure optique, dans un écran électronique ou dans un autre article à structure multicouche et couche optique holographique, de préférence comprenant au moins un hologramme, qui a été exposé dans la couche de photopolymère.
